# EUROPEAN PATENT SPECIFICATION

(11) **EP 1 180 061 B1**
(45) Date of publication and mention of the grant of the patent: **27.12.2006**
(21) Application number: 00932772.7
(22) Date of filing: 25.05.2000
(51) Int. Cl.: B01F 17/00, C11D 3/37, A01N 25/16, C09K 8/38, A62D 1/00, C11D 3/00

(54) **METHOD FOR USING ZWITTERIONIC POLYMERIC SUDS ENHANCERS**
VERWENDUNGSVERFAHREN VON ZWITTERIONISCHEN POLYMEREN SCHAUMBILDERN
PROCEDE PERMETTANT D'UTILISER DES ACTIVATEURS POLYMERES ZWITTERIONIQUES D'EAU SAVONNEUSE

(30) Priority: 26.05.1999 US 320834
(43) Date of publication of application: 20.02.2002
(73) Proprietor: THE PROCTER & GAMBLE COMPANY, Cincinnati, Ohio 45202 (US); Rhodia, Inc., Mississauga, Ontario L5C 1V8 (CA)
(72) Inventor: SIVIK, Mark, Robert, Mason, Ohio 45040 County of Warren (US); BODET, Jean-François, Mason, OH 45040 (US); KLUESENER, Bernard, William, Harrison, OH 45030 (US); SCHEPER, William, Michael, Lawrenceburg, IN 47025 (US); BERGERON, Vance, F-92160 Antony (FR); YEUNG, Dominic, Wai-Kwing, Mississauga, Ontario L4Y 3J2 (CA)
(74) Representative: Goodier, Claire-Louise
(86) International application number: PCT/US2000/014407
(87) International publication number: WO 2000/071240

(56) References cited:
- EP-A- 0 357 976
- WO-A-81/01007
- WO-A-99/27053
- WO-A-99/27057
- DE-A- 19 545 630
- GB-A- 2 104 091
- US-A- 4 784 789
- DATABASE WPI Section Ch, Week 198437 Derwent Publications Ltd., London, GB; Class A97, AN 1984-228141 XP002147052 & JP 59 135293 A (KAO CORP), 3 August 1984 (1984-08-03)

## Description

The present invention relates to a method for using zwitterionic polymeric suds enhancers (stabilizers) to increase the suds and/or foam volume and suds and/or foam retention in suds-forming and/or foam-forming compositions comprising such zwitterionic polymeric suds stabilizers. Suitable suds-forming and/or foam-forming compositions comprise one or more zwitterionic polymeric suds stabilizers.

### BACKGROUND OF THE INVENTION

Suds-forming and/or foam-forming compositions are well known. Such compositions require a suds-forming component and/or foam-forming component. Polymeric materials are one example of such suds-forming components and/or foam-forming components.

Formulators have been attempting unsuccessfully to develop better performing polymeric materials for use as suds-forming and/or foam-forming components.

Accordingly, there remains a need in the art for polymeric materials useful as suds-forming and/or foam-forming components suitable for suds-forming and/or foam-forming compositions which exhibit increased suds and/or foam volume and suds and/or foam retention. The need exists for a composition which can maintain a high level of suds and/or foam as long as the suds-forming and/or foam-forming composition is effective for its purpose.

### SUMMARY OF THE INVENTION

The present invention meets the aforementioned needs in that it has been surprisingly discovered that certain zwitterionic polymeric materials serve as suds and/or foam extenders and suds and/or foam volume enhancers in suds-forming and/or foam-forming compositions.

The zwitterionic polymeric suds stabilizers of the present invention comprise monomeric units which have at least one moiety capable of sustaining a negative charge at a pH of from about 4 to about 12 and at least one moiety capable of sustaining a positive charge within the same pH range.

The present invention relates to a method according to claim 1 providing increased suds volume and increased suds retention in liquid suds-forming and/or foam-forming compositions as defined in claim 1, other than liquid dishwashing compositions.

In one aspect, a method for providing increased suds volume and increased suds retention while washing parts of a person's body, such as hair, hands, other parts of the body, in need of cleaning, comprising the step of contacting said parts with an aqueous solution of a personal care composition, said personal care composition comprising:
a) an effective amount of a zwitterionic polymeric suds stabilizer as hereinafter defined;
b) an effective amount of a detersive surfactant; and
c) balance carriers and other adjunct ingredients;
provided that the pH of a 10% aqueous solution of said personal care composition is from about 4 to about 12, is provided.

In another aspect, a method for providing increased suds volume and increased suds retention while washing, preferably by hand, a fabric and/or garment in need of cleaning, comprising the step of contacting said fabric and/or garment with an aqueous solution of a laundry detergent composition, said laundry detergent composition comprising:
a) an effective amount of a polymeric suds stabilizer as hereinafter defined;
b) an effective amount of a detersive surfactant; and
c) balance carriers and other adjunct ingredients;
provided that the pH of a 10% aqueous solution of said laundry detergent composition is from about 4 to about 12, is provided.

In yet another aspect, a method for providing increased suds volume and increased suds retention while cleaning a hard surface, such as a countertop, tile floors, bathroom fixtures, bathtubs, showers, toilets, etc., in need of cleaning in need of cleaning, comprising the step of contacting said hard surface with an aqueous solution of a hard surface cleaning composition, said hard surface cleaning composition comprising:
a) an effective amount of a polymeric suds stabilizer as hereinafter defined;
b) an effective amount of a detersive surfactant; and
c) balance carriers and other adjunct ingredients;

These and other objects, features and advantages will become apparent to those of ordinary skill in the art from a reading of the following detailed description and the appended claims.

All percentages, ratios and proportions herein are by weight, unless otherwise specified. All temperatures are in degrees Celsius (°C) unless otherwise specified. All documents cited are in relevant part, incorporated herein by reference.

### DETAILED DESCRIPTION OF THE INVENTION

The present invention relates to zwitterionic polymeric materials which provide enhanced suds and/or foam duration and enhanced suds and/or foam volume when formulated into suds-forming and/or foam-forming compositions. The zwitterionic polymers of the present invention may be homopolymers or copolymers, each of which may be suitably crosslinked. The zwitterionic polymers are comprised of moieties which when placed in an aqueous solution having a pH of form 4 to about 12, said moieties are capable of sustaining a positive or negative charge.

The suds-forming and/or foam-forming compositions of the present invention have a pH of from about 4 to about 12 when measured as a 10% aqueous solution. The polymeric suds enhancers of the present invention are zwitterionic polymers. For the purposes of the present invention the term "zwitterionic polymer" is defined as "a polymeric material comprised of one or more monomers wherein each monomer has one or more moieties capable of sustaining a positive or negative charge at a pH of from about 4 to about 12 such that the number of positively charged moieties is equal to the number of negatively charged moieties at the isoelectric point of said polymer."

The compositions according to the present invention also comprise an effective amount of one or more detersive surfactants described herein below as well as carriers and other adjunct ingredients.

The suds-forming and/or foam-forming compositions of the present invention comprise:
a) an effective amount of a zwitterionic polymeric suds stabilizer; and
b) optionally an effective amount of a detersive surfactant or clay; and
c) the balance carriers and other adjunct ingredients;
provided that a 10% aqueous solution of said composition has a pH of from about 4 to about 12.

The following describe non-limiting examples of polymeric material which may be suitable for use in the suds-forming and/or foam-forming compositions of the present invention.

### Zwitterionic Polymers

The polymeric suds stabilizers as emploied according to the invention the present invention are polymers as defined in claim 1 wherein the monomers which comprise said polymers contain a moiety capable of being protonated at a pH of from about 4 to about 12, or a moiety capable of being de-protonated at a pH of from about 4 to about 12, of a mixture of both types of moieties.

The zwitterionic polymer emploied according to the invention as a suds volume and suds duration enhancer has the formula: 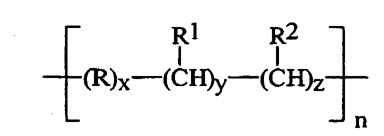 wherein R is C₁-C₁₂ linear alkylene, C₁-C₁₂ branched alkylene, and mixtures thereof; preferably C₁-C₄ linear alkylene, C₃-C₄ branched alkylene; more preferably methylene and 1,2-propylene. R¹ and R² are defined herein after. The index x is from 0 to 6; y is 0 or 1; z is 0 or 1.

The index n has the value such that the zwitterionic polymers of the present invention have an average molecular weight of from about 1,000 to about 2,000,000 preferably from about 5,000 to about 1,000,000, more preferably from about 10,000 to about 750,000, more preferably from about 20,000 to about 500,000, even more preferably from about 35,000 to about 300,000 daltons. The molecular weight of the polymeric suds boosters, can be determined via conventional gel permeation chromatography.

### Anionic Units

R¹ is a unit capable of having a negative charge at a pH of from about 4 to about 12. Preferred R¹ has the formula:

-(L)ᵢ-(S)ⱼ-R³

wherein L is a linking unit independently selected from the following: 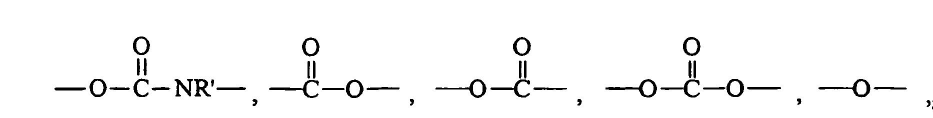 and mixtures thereof, wherein R' is independently hydrogen, C₁-C₄ alkyl, and mixtures thereof; preferably hydrogen or alternatively R' and S can form a heterocycle of 4 to 7 carbon atoms, optionally containing other hetero atoms and optionally substituted. Preferably the linking group L can be introduced into the molecule as part of the original monomer backbone, for example, a polymer having L units of the formula: 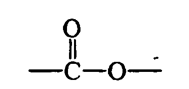 can suitably have this moiety introduced into the polymer via a carboxylate containing monomer, for example, a monomer having the general formula: 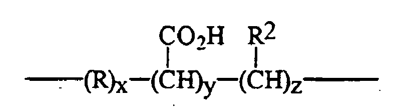 When the index i is 0, L is absent.

For anionic units S is a "spacing unit" wherein each S unit is independently selected from C₁-C₁₂ linear alkylene, C₁-C₁₂ branched alkylene, C₃-C₁₂ linear alkenylene, C₃-C₁₂ branched alkenylene, C₃-C₁₂ hydroxyalkylene, C₄-C₁₂ dihydroxyalkylene, C₆-C₁₀ arylene, C₈-C₁₂ dialkylarylene, -(R⁵O)ₖR⁵-, -(R⁵O)ₖR⁶(OR⁵)ₖ-, -CH₂CH(OR⁷)CH₂-, and mixtures thereof; wherein R⁵ is C₂-C₄ linear alkylene, C₃-C₄ branched alkylene, and mixtures thereof, preferably ethylene, 1,2-propylene, and mixtures thereof, more preferably ethylene; R⁶ is C₂-C₁₂ linear alkylene, and mixtures thereof, preferably ethylene; R⁷ is hydrogen, C₁-C₄ alkyl, and mixtures thereof, preferably hydrogen. The index k is from 1 to about 20.

Preferably S is C₁-C₁₂ linear alkylene, -(R⁵O)ₖR⁵-, and mixtures thereof. When S is a -(R⁵O)ₖR⁵- unit, said units may be suitably formed by the addition an alkyleneoxy producing reactant (e.g. ethylene oxide, epichlorohydrin) or by addition of a suitable polyethyleneglycol. More preferably S is C₂-C₄ linear alkylene. When the index j is 0 the S unit is absent.

R³ is independently selected from hydrogen, -CO₂M, -SO₃M, -OSO₃M, - CH₂P(O)(OM)₂, -OP(O)(OM)₂, units having the formula:

-CR8_{R}9_{R}10

wherein each R⁸, R⁹, and R¹⁰ is independently selected from the group consisting of hydrogen, -(CH₂)ₘR¹¹, and mixtures thereof, wherein R¹¹ is -CO₂H, -SO₃M, - OSO₃M, -CH(CO₂H)CH₂CO₂H, -CH₂P(O)(OH)₂, -OP(O)(OH)₂, and mixtures thereof, preferably -CO₂H, -CH(CO₂H)CH₂CO₂H, and mixtures thereof, more preferably - CO₂H; provided that one R⁸, R⁹, or R¹⁰ is not a hydrogen atom, preferably two R⁸, R⁹, or R¹⁰ units are hydrogen. M is hydrogen or a salt forming cation, preferably hydrogen. The index m has the value from 0 to 10.

### Cationic Units

R² is a unit capable of having a positive charge at a pH of from about 4 to about 12. Preferred R² has the formula:

-(L¹)_{i'}-(S)_{j'}-R⁴

wherein L¹ is a linking unit independently selected from the following: 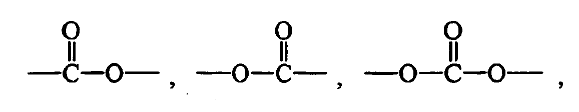 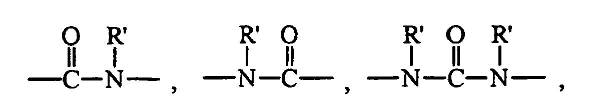 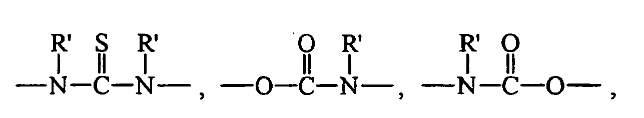 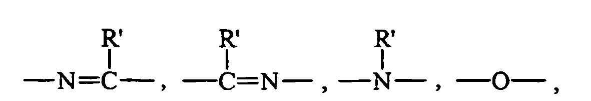 and mixtures thereof; wherein R' is independently hydrogen, C₁-C₄ alkyl, and mixtures thereof; preferably hydrogen or alternatively R' and S can form a heterocycle of 4 to 7 carbon atoms, optionally containing other hetero atoms and optionally substituted. Preferably L¹ has the formula: 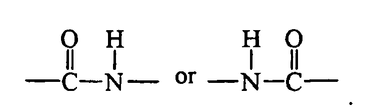 When the index i' is equal to 0, L¹ is absent.

For cationic units S is a "spacing unit" wherein each S unit is independently selected from C₁-C₁₂ linear alkylene, C₁-C₁₂ branched alkylene, C₃-C₁₂ linear alkenylene, C₃-C₁₂ branched alkenylene, C₃-C₁₂ hydroxyalkylene, C₄-C₁₂ dihydroxyalkylene, C₆-C₁₀ arylene, C₈-C₁₂ dialkylarylene, -(R⁵O)ₖR⁵-, -(R⁵O)ₖR⁶(OR⁵)ₖ-, -CH₂CH(OR⁷)CH₂-, and mixtures thereof; wherein R⁵ is C₂-C₄ linear alkylene, C₃-C₄ branched alkylene, and mixtures thereof, preferably ethylene, 1,2-propylene, and mixtures thereof, more preferably ethylene; R⁶ is C₂-C₁₂ linear alkylene, and mixtures thereof, preferably ethylene; R⁷ is hydrogen, C₁-C₄ alkyl, and mixtures thereof, preferably hydrogen. The index k is from 1 to about 20.

Preferably S is C₁-C₁₂ linear alkylene, and mixtures thereof. Preferably S is C₂-C₄ linear alkylene. When the index j' is 0 the S unit is absent.

R⁴ is independently selected from amino, alkylamino carboxamide, 3-imidazolyl, 4-imidazolyl, 2-imidazolinyl, 4-imidazolinyl, 2-piperidinyl, 3-piperidinyl, 4-piperidinyl, 1-pyrazolyl, 3-pyrazoyl, 4-pyrazoyl, 5-pyrazoyl, 1-pyrazolinyl, 3-pyrazolinyl; 4-pyrazolinyl, 5-pyrazolinyl, 2-pyridinyl, 3-pyridinyl, 4-pyridinyl, piperazinyl, 2-pyrrolidinyl, 3-pyrrolidinyl, guanidino, amidino, and mixtures thereof, preferably dialkylamino having the formula:

-N(R¹¹)₂

wherein each R¹¹ is independently hydrogen, C₁-C₄ alkyl, and mixtures thereof, preferably hydrogen or methyl or alternatively the two R¹¹ can form a heterocycle of 4 to 8 carbon atoms, optionally containing other hetero atoms and optionally substituted.

An example of a preferred zwitterionic polymer according to the present invention has the formula: 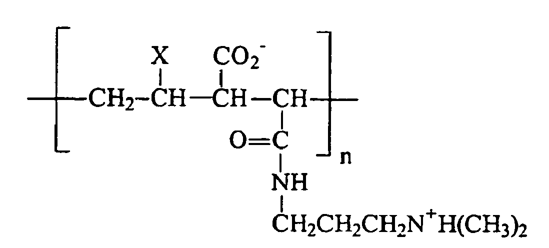 wherein X is C₆, n has a value such that the average molecular weight is from about 5,000 to about 1,000,000 daltons.

Further preferred zwitterionic polymers according to the present invention are polymers comprising monomers wherein each monomer has only cationic units or anionic units, said polymers have the formula: 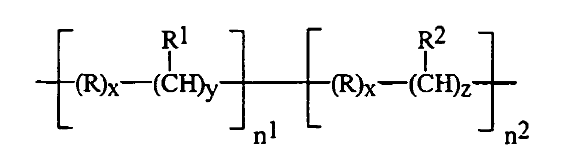 wherein R, R¹, x, y, and z are the same as defined herein above; n¹ + n² = n such that n has a value wherein the resulting zwitterionic polymer has a molecular weight of form about 5,000 to about 1,000,000 daltons.

An example of a polymer having monomers with only an anionic unit or a cationic unit has the formula: 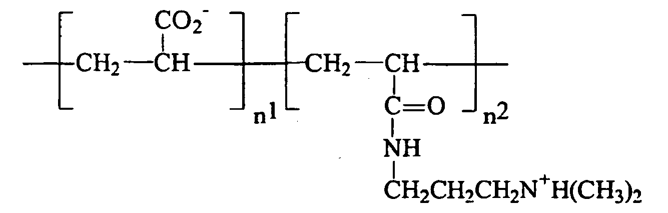 wherein the sum of n¹ and n² provide a polymer with an average molecular weight of from about 5,000 to about 750,000 daltons.

Another preferred zwitterionic polymer according to the present invention are polymers which have limited crosslinking, said polymers having the formula: 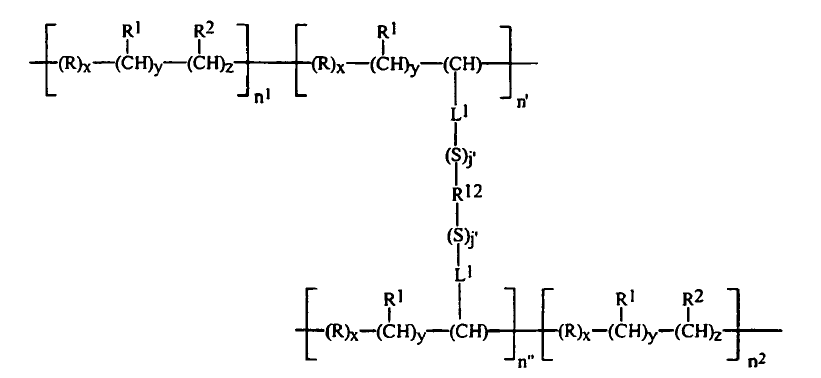 wherein R, R¹, L¹, S, j', x, y, and z are the same as defined herein above; n' is equal to n", and the value n' + n" is less than or equal to 5% of the value of n¹ + n² = n; n provides a polymer with an average molecular weight of from about 1,000 to about 2,000,000 daltons. R¹² is nitrogen, C₁-C₁₂ linear alkylene amino alkylene having the formula:

-R¹³-N-R¹³-

L¹, and mixtures thereof, wherein each R¹³ is independently L¹ or ethylene.

The zwitterionic polymers of the present invention may comprise any combination of monomer units, for example, several different monomers having various R¹ and R² groups can be combined to form a suitable suds stabilizer. Alternatively the same R¹ unit may be used with a selection of different R² units and vice versa.

### METHODS OF USE

The present invention relates to a method for providing increased suds volume and increased suds retention in certain suds-forming and/or foam-forming compositions as defined in claim 1.

In one aspect, a method for providing increased suds volume and increased suds retention while washing parts of a person's body, such as hair, hands, other parts of the body, in need of cleaning, comprising the step of contacting said parts with an aqueous solution of a personal care composition, said personal care composition comprising:
a) an effective amount of a zwitterionic polymeric suds stabilizer as hereinbefore defined;
b) an effective amount of a detersive surfactant; and
c) balance carriers and other adjunct ingredients;
provided that the pH of a 10% aqueous solution of said personal care composition is from about 4 to about 12, is provided.

In another aspect, a method for providing increased suds volume and increased suds retention while washing, preferably by hand, a fabric and/or garment in need of cleaning, comprising the step of contacting said fabric and/or garment with an aqueous solution of a laundry detergent composition, said laundry detergent composition comprising:
a) an effective amount of a zwitterionic polymeric suds stabilizer as hereinbefore defined;
b) an effective amount of a detersive surfactant; and
c) balance carriers and other adjunct ingredients;
provided that the pH of a 10% aqueous solution of said laundry detergent composition is from about 4 to about 12, is provided.

In yet another aspect, a method for providing increased suds volume and increased suds retention while cleaning a hard surface, such as a countertop, tile floors, bathroom fixtures, bathtubs, showers, toilets, etc., in need of cleaning in need of cleaning, comprising the step of contacting said hard surface with an aqueous solution of a hard surface cleaning composition, said hard surface cleaning composition comprising:
a) an effective amount of a zwitterionic polymeric suds stabilizer as hereinbefore defined;
b) an effective amount of a detersive surfactant; and
c) balance carriers and other adjunct ingredients;
provided that the pH of a 10% aqueous solution of said hard surface cleaning composition is from about 4 to about 12, is provided.

### COMPOSITIONS FOR PERSONAL CARE PRODUCTS

### Shampoos and Hand and/or Body Wash

In addition to the zwitterionic polymeric suds stabilizers of the present invention, beauty care and personal care products, such as shampoos and soaps for hand and/or body wash; of the present invention contain adjunct ingredients. Additional background on such products is provided by PCT application serial number PCT/US98/04474, filed March 6, 1998 and published as WO 98/38973.

Pearlescent additives, also known as pearlizing agents, are added to beauty and personal care products such as hair and skin care products to provide a pearly appearance to the products. Chemicals which are tiny (micron size) needles or platelets often exhibit this pearly appearance. Materials which exhibit this effect are ethylene glycol mono-and distearate, TiO₂ coated mica, bismuth oxychloride, and natural mother of pearl. Many organic materials exhibit this pearlescence provided they can be produced in an appropriate needle or platelet shape. Ethylene glycol distearate (EGDS) or ethylene glycol monostearate (EGMS) are the most commonly utilized pearlizing agents.

A stable, mild free flowing cold pearlizing concentrate is typically prepared using i) a pearlizing agent of this invention, preferably a glycol stearate; ii) a nonionic surfactant; iii) an amphoteric surfactant emulsifier and stabilizer, iv) a glycol emulsifier and v) water; to obviate the use of cocodiethanolamide and provide excellent compatibility with any ionic surfactant. The concentrate will typically be essentially free of anionic surfactants such that the concentrate is compatible with essentially any ionic surfactants that may be used in the personal care product to which this concentrate is added.

The pearlizing agent comprises from about 5% to about 40%, preferably from about 10% to about 30% and most preferably from about 15% to about 25%, by weight based on the total weight of the concentrate.

The pearlizing agent can be selected from the group consisting of hydroxyl stearate, polyethylene glycol mono- and di-stearates, ethylene glycol mono- and distearates, stearic monoethanolamide, and mixtures thereof. The preferred agents are polyethylene glycol mono- and distearates, and ethylene glycol mono- and di-stearates. The most preferred pearlizing agents for use are: ethylene glycol mono- and di-stearates.

The fatty acid based member must be derived from a fatty acid feedstock (which includes free fatty acids, carboxylate salts, fatty mono-, di- and/or tri-glycerides) which consists of at least about 90% by weight of octadecanoic acid, i.e. the saturated fatty acid having one carboxyl group (or derivative thereof) and a seventeen carbon alkyl tail covalently bonded thereto. Stearic acid is available commercially in different grades, typically containing at least some portion of palmitic acid, i.e. the saturated fatty acid having one carboxyl group, and a fifteen carbon alkyl tail covalently bonded thereto. For example; stearic acid is available in grades of 37.5% (nominal) and 42.5% (nominal) purity. Thus, those grades of stearic acid wherein less than about 90% of the fatty acid chains are octadecanoic acid will not be useful in making the fatty acid based member used herein, unless the stearic acid is first purified to remove a sufficient number of species which are not derived from octadecanoic acid. A useful grade of stearic acid is the 95% (nominal) grade the CTFA specifications of which are 92.5% to 97.5% stearic acid and a maximum of 5% palmitic acid. A fatty acid comprised of 90% stearic acid and 10% palmitic acid should also be useful.

The pearlizing agent is most useful as a concentrate with other components, e.g. those other components as described in published Patent Cooperation Treaty Application No. WO 98/38973, published on September 11, 1998.

A second component of the beauty and personal care product is a nonionic surfactant. This surfactant can function as an emulsifier and stabilizer in the formulation. The term "nonionic surfactant" as utilized herein encompasses mixtures of nonionic surfactants.

Examples of useful nonionic surfactants include condensates of ethylene oxide with a hydrophobic moiety which has an average hydrophilic lipophilic balance (HLB) between about 8 to about 16, and more preferably, between about 10 and about 12.5. These surfactants include the condensation products of primary or secondary aliphatic alcohols having from about 8 to about 24 carbon atoms, in either straight or branched chain configuration, with from about 2 to about 40, and preferably between about 2 and about 9 moles of ethylene oxide per mole of alcohol.

In a preferred embodiment the aliphatic alcohol comprises between about 9 and about 18 carbon atoms and is ethoxylated with between about 3 and about 12 moles of ethylene oxide per mole of aliphatic alcohol. Especially preferred are the about 12 to about 15 carbon primary alcohol ethoxylates containing about 5 to about 9 moles of ethylene oxide per mole of alcohol. One such material is commercially sold under the trade name NEODOL 25-9 by Shell Chemical Company. Other commercial nonionic surfactants include NEODOL 25-6.5 and NEODOL 25-7 sold by Shell Chemical Company.

Other suitable nonionic surfactants include the condensation products of about 6 to about 12 carbon atom alkyl phenols with about 3 to about 30, and preferably between about 5 and 14 moles of ethylene oxide. Examples of such surfactants are sold under the trade manes Igepal CO 530, Igepal CO 630, Igepal CO720 and Igepal CO 730 by Rhone-Poulenc Inc. Still other suitable nonionic surfactants are described in U.S. Patent No. 3,976,586. Most preferred for use are mixed linear alcohol ethoxylates such as Laureth-7 sold as Rhodasurf L-790 by Rhône-Poulenc Inc.

The nonionic surfactant is incorporated in the cold pearlizing concentrate in an amount of from about 3% to about 30%; preferably from about 8% to about 25% and most preferably from about 10% to 20%, based on the total weight of the concentrate.

An amphoteric surfactant comprises the third component of the present invention. The term "amphoteric surfactant" as utilized herein encompasses one or more amphoteric surfactants such as mixtures of amphoteric surfactants. Preferably, amphoteric surfactants known as the betaines, their derivatives, and mixtures thereof are incorporated to provide an enhanced pearlizing effect.

Examples of suitable amphoteric surfactants include the alkali metal, alkaline earth metal, ammonium or substituted ammonium salts of alkyl amphocarboxy glycinates and alkyl amphocarboxypropionates, alkyl amphodipropionates, alkyl amphodiacetates, alkyl amphoglycinates and alkyl amphopropionates wherein alkyl represents an alkyl group having 6 to 20 carbon atoms. Other suitable amphoteric surfactants include alkyl iminopropionates, alkyl iminodipropionates and alkyl amphopropylsulfonates having between 12 and 18 carbon atoms; alkyl betaines and amidopropyl betaines and alkyl sultaines and alkylamidopropylhydroxy sultaines wherein alkyl represents an alkyl group having 6 to 20 carbon atoms.

Particularly useful amphoteric surfactants include both mono and dicarboxylates such as those of the formulae: 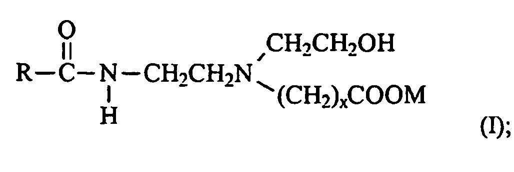 and 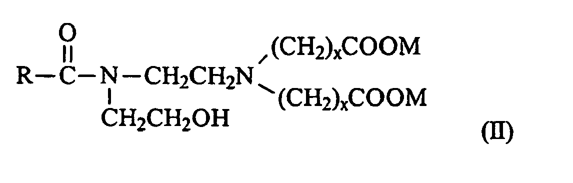 wherein R is an alkyl group of 6-20 carbon atoms, x is 1 or 2 and M is hydrogen or sodium. Mixtures of the above structures are particularly preferred.

Other formulae for the above amphoteric surfactants include the following:
**Alkyl betaines** 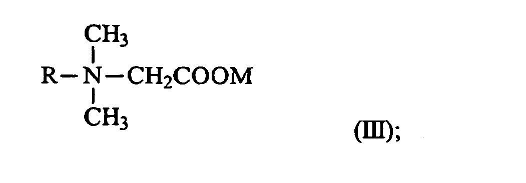
**Amidopropyl betaines** 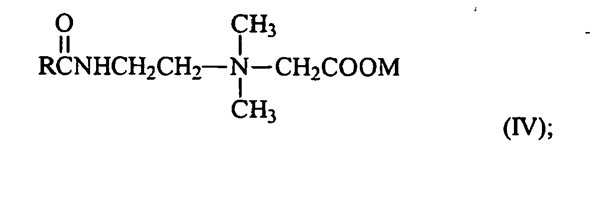
**Alkyl sultaines** 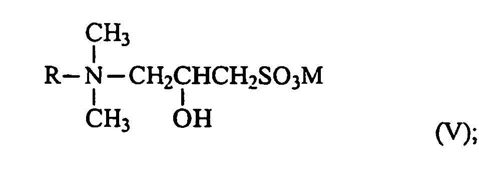 and
**Alkyl amidopropylhydroxy sultaines** 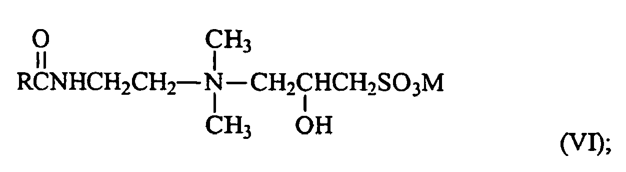
where R is a alkyl group of 6-20 carbon atoms and M is potassium, sodium or a monovalent cation.

Of the above amphoteric surfactants, particularly preferred are the alkali salts of alkyl amphodipropionates, alkyl amphodiacetates, alkyl amphoglycinates, alkyl amphopropyl sulfonates and alkyl amphopropionates wherein alkyl represents an alkyl group having 6 to 20 carbon atoms. Even more preferred are compounds wherein the alkyl group is derived from coconut oil or is a lauryl group, for example cocoamphodipropionate. Such cocoamphodipropionate surfactants are commercially sold under the trademarks MIRANOL C2M-SF CONC. and MIRANOL FBS by Rhone-Poulenc Inc.

Other commercially useful amphoteric surfactants include:
- cocoamphoacetate (sold under the trademarks MIRANOL ULTRA C-32 and MIRAPON FA),
- cocoamphopropionate (sold under the trademarks MIRANOL CMSF CONC. and MIRAPON FAS),
- cocoamphodiacetate (sold under the trademarks MIRANOL C2M CONC. and MIRAPON FB),
- lauroamphoacetate (sold under the trademarks MIRANOL HM CONC. and MIRAPON LA),
- lauroamphodiacetate (sold under the trademarks MIRANOL H2M CONC. and MIRAPON LB),
- lauroamphodipropionate (sold under the trademarks MIRANOL H2M-SF CONC. AND MIRAPON LBS),
- lauroamphodiacetate obtained from a mixture of lauric and myristic acids (sold under the trademark MIRANOL BM CONC.), and
- cocoamphopropyl sulfonate (sold under the trademark MIRANOL CS CONC.)
- caproamphodiacetate (sold under the trademark MIRANOL S2M CONC.),
- caproamphoacetate (sold under the trademark MIRANOL SM CONC.),
- caproamphodipropionate (sold under the trademark MIRANOL S2M-SF CONC.), and
- stearoamphoacetate (sold under the trademark MIRANOL DM).

The most preferred amphoteric surfactant for use is cocoamphoacetate. It can be present from 0% to 10% based on the total weight of the concentrate. Preferably, cocoamphoacetate will comprise from about 1% to about 7% and most preferably from about 2% to about 4% of the concentrate.

Also useful herein are the betaines and amidobetaines which are compounds of the general structure: 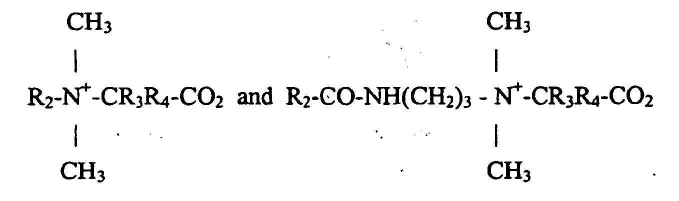 respectively wherein R₂ is C₈ - C₂₂ alkyl or alkenyl; R₃ is H or C₁- C₄ alkyl; and R₄ is H or C₁ - C₄ alkyl.

The betaines useful herein include the high alkyl betaines such as cocodimethyl carboxymethyl betaine, lauryl dimethyl carboxymethyl betaine, lauryl dimethyl alpha-carboxy-ethyl betaine, cetyl dimethyl carboxymethyl betaine, lauryl bis-(2-hydroxyethyl)carboxy methyl betaine, stearyl bis-(2-hydroxy-propyl)carboxymethyl betaine, oleyl dimethyl gamma-carboxypropyl betaine, and lauryl bis-(2-hydroxypropyl)alphacarboxyethyl betaine. The sulfobetaines are also preferred and may be represented by cocodimethyl sulfopropyl betaine, stearyldimethyl sulfopropyl betaine, lauryl dimethyl sulfoethyl betaine, lauryl bis-(2-hydroxy-ethyl)sulfopropyl betaine and mixtures thereof. A particularly preferred composition utilizes cocoamidopropyl betaine.

Most preferably, the amphoteric surfactant can be cocoamphoacetate and cocoamidopropyl betaine acting as amphoteric co-emulsifiers.

The amphoteric surfactant can be present from about 2% to about 20% weight percent based on the total weight of the pearlizing concentrate. Preferably, the amphoteric will comprise from about 4% to about 16%, most preferably from about 6% to about 10%, of the pearlizing concentrate.

The fourth component consists of a glycol emulsifier. Propylene glycol (1,2, and 1, 3) and other alcohols such as 1, 3 - butylene glycol, 2, 3 - butylene glycol, ethylene glycol and mixtures thereof are useful emulsifiers. The glycol emulsifier can be present from 0% to about 15%, preferably from about 1% to about 10% and most preferably from about 2% to about 5%.

For the fifth component, the remainder is water, preferably deionized. Generally, water is added in an amount of from about 20% to about 70%, preferably from about 30% to about 60%, and most preferably from about 40% to about 55% based on the total weight of the concentrate.

Non-essential optional components can be utilized in the concentrates of the present invention as a convenient means of incorporation into beauty and personal care products. Such conventional optional ingredients are well known to those skilled in the art, e.g., preservatives such as benzyl alcohol, methyl paraben, propyl paraben and imidazolidinyl urea; thickeners and viscosity modifiers such as block polymers of ethylene oxide and propylene oxide, e.g. ANTAROX F-88 (Rhone-Poulenc Inc.), sodium chloride, sodium sulfate, polyvinyl alcohol, and ethyl alcohol; pH adjusting agents such as citric acid, succinic acid, phosphoric acid, sodium hydroxide, sodium carbonate; perfumes; dyes; and sequestering agents such as disodium ethylenediamine tetra-acetate. Such agents generally are used individually at levels of from 0% to about 2%, preferably from 0.01% to about 1.0% by weight of the concentrate.

The pH of the concentrate compositions is not critical and can be in the range of from about 2 to about 12, preferably from about 4 to about 10 and most preferably from about 6 to about 8. The pH can be adjusted using a buffer such as citric acid.

The order of addition to the mixing tank of the individual components of the concentrate is not critical nor is the reasonably elevated temperature; however, preferably the water and pearlizing agent are intimately blended at from about 50° to about 90°C, more preferably from about 70° to about 80°C with high agitation until the pearlizing agent is emulsified. The nonionic and amphoteric surfactants are then blended into the mix until the mixture is clear. The mixture is then allowed to cool to room temperature. Generally, the concentrate can be stored at a temperature of from about 0°C to about 45°C, preferably from about 15°C to about 35°C for at least one day and preferably two days in order to fully develop its pearlizing characteristics.

The personal care compositions may further comprise a silicone compound. As referred to herein, a silicone compound is a nonfunctionalized siloxane having a viscosity of from about 5 to about 600,000 cs (centistoke), and preferably from about 350 to about 10,000 cs, at 25° C. The so-called "rigid silicones", as described in U.S. Pat. No. 4,902,499, having a viscosity above 600,000 cs at 20° C, e.g., 700,000 cs plus, and a weight average molecular weight of at least about 500,000, also are useful. The silicone compound is typically a polydimethylsiloxane, typically a linear polydimethylsiloxane terminated at each end with a trimethylsilyl group. The silicone compound can be a dimethicone as specified by the CTFA, i.e. an alpha,omega-trimethylsilyl-polydimethylsiloxane having a viscosity at 25°C of at least 25 centistokes and less than 60,000 centistokes. The silicone compound is typically used in the context of a shampoo and is added to the composition in an amount sufficient to impart improved combing and improved feel, such as softness, to the hair after shampooing.

The silicone hair conditioning agent for use herein will preferably have viscosity of from about 1,000 to about 2,000,000 centistokes at 25o C., more preferably from about 10,000 to about 1,800,000, even more preferably from about 100,000 to about 1,500,000. The viscosity can be measured by means of a glass capillary viscometer as set forth in Dow Coming Corporate Test Method CTM0004, Jul. 20, 1970.

The silicone hair conditioning agent will be used in the shampoo compositions hereof at levels of from about 0.1% to about 10% by weight of the composition; preferably from about 0.5% to about 8%, more preferably from about 1% to about 5%.

Suitable insoluble, nonvolatile silicone fluids include polyalkyl siloxanes, polyaryl siloxanes, polyalkylaryl siloxanes, polyether siloxane copolymer and mixtures thereof. However, other insoluble, nonvolatile silicone fluids having hair conditioning properties may be used. The term "nonvolatile" as used herein shall mean that the silicone material exhibits very low or no significant vapor pressure at ambient conditions, as is well understood in the art. The term "silicone fluid" shall mean flowable silicone materials having a viscosity of less than 1,000,000 centistokes at 25° C. Generally, the viscosity of the fluid will be between about 5 and 1,000,000 centistokes at 25° C., preferably between about 10 and about 100,000. The term "silicone", as used herein, shall be synonomous with the term "polysiloxane".

The nonvolatile polyalkylsiloxane fluids that may be used include, for example, polydimethyl siloxanes. These siloxanes are available, for example, from the General Electric Company as a VISCASIL series and from Dow Coming as the Dow Coming 200 series.

The polyalkylaryl siloxane fluids that may be used, also include, for example, polymethylphenylsiloxanes. These siloxanes are available, for example, from the General Electric Company as SF 1075 methyl phenyl fluid or from Dow Corning as 556 Cosmetic Grade Fluid.

The polyether siloxane copolymers that may be used include, for example, a polypropylene oxide modified dimethylpolysiloxane (e.g., Dow Coming DC-1248) although ethylene oxide or mixtures of ethylene oxide and propylene oxide may also be used. The ethylene oxide and polypropylene oxide level must be sufficiently low to prevent solubility in water and the composition hereof.

Silicone fluids hereof also include polyalkyl or polyaryl siloxanes with the structure shown in U.S. Patent No. 5,573,709. herein R is alkyl or aryl, and x is an integer from about 7 to about 8,000 may be used. "A" represents groups which block the ends of the silicone chains.

The alkyl or aryl groups substituted on the siloxane chain (R) or at the ends of the siloxane chains (A) may have any structure as long as the resulting silicones remain fluid at room temperature, are hydrophobic, are neither irritating, toxic nor otherwise harmful when applied to the hair, are compatible with the other components of the composition, are chemically stable under normal use and storage conditions, and are capable of being deposited on and of conditioning hair.

Suitable A groups include methyl, methoxy, ethoxy, propoxy, and aryloxy. The two R groups on the silicone atom may represent the same group or different groups. Preferably, the two R groups represent the same group. Suitable R groups include methyl, ethyl, propyl, phenyl, methylphenyl and phenylmethyl. The preferred silicones are polydimethyl siloxane, polydiethylsiloxane, and polymethylphenylsiloxane. Polydimethylsiloxane is especially preferred.

References disclosing suitable silicone fluids include U.S. Pat. No. 2,826,551, Geen; U.S. Pat. No. 3,964,500, Drakoff, issued Jun. 22, 1976; U.S. Pat. No. 4,364,837, Pader; and British Patent 849,433, Woolston. Also referenced is Silicon Compounds distributed by Petrarch Systems, Inc., 1984. This reference provides an extensive (though not exclusive) listing of suitable silicone fluids.

Another silicone material that can be especially useful in the silicone conditioning agents is insoluble silicone gum. The term "silicone gum", as used herein, means polyorganosiloxane materials having a viscosity at 25° C. of greater than or equal to 1,000,000 centistokes. Silicone gums are described by Petrarch and others including U.S. Pat. No. 4,152,416, Spitzer et al., issued May 1, 1979 and Noll, Walter, Chemistry and Technology of Silicones, New York: Academic Press 1968. Also describing silicone gums are General Electric Silicone Rubber Product Data Sheets SE 30, SE 33, SE 54 and SE 76. The "silicone gums" will typically have a mass molecular weight in excess of about 200,000, generally between about 200,000 and about 1,000,000. Specific examples include polydimethylsiloxane, (polydimethylsiloxane) (methylvinylsiloxane) copolymer, poly(dimethylsiloxane) (diphenyl siloxane)(methylvinylsiloxane) copolymer and mixtures thereof.

Preferably the silicone hair conditioning agent comprises a mixture of a polydimethylsiloxane gum, having a viscosity greater than about 1,000,000 centistokes and polydimethylsiloxane fluid having a viscosity of from about 10 centistokes to about 100,000 centistokes, wherein the ratio of gum to fluid is from about 30:70 to about 70:30, preferably from about 40:60 to about 60:40.

Another optional ingredient that can be included in the silicone conditioning agent is silicone resin. Silicone resins are highly crosslinked polymeric siloxane systems. The crosslinking is introduced through the incorporation of trifunctional and tetrafunctional silanes with monofunctional or difunctional, or both, monomer units during manufacture of the silicone resin. As is well understood in the art, the degree of crosslinking that is required in order to result in a silicone resin will vary according to the specific silane units incorporated into the silicone resin. In general, silicone materials - which have a sufficient level of trifunctional and tetrafunctional siloxane monomer units (and hence, a sufficient level of crosslinking) such that they dry down to a rigid, or hard, film are considered to be silicone resins. The ratio of oxygen atoms to silicon atoms is indicative of the level of crosslinking in a particular silicone material. Silicone materials which have at least about 1.1 oxygen atoms per silicon atom will generally be silicone resins herein. Preferably, the ratio of oxygen:silicon atoms is at least about 1.2:1.0. Silanes used in the manufacture of silicone resins include monomethyl-, dimethyl-, monophenyl-, diphenyl-, methylphenyl-, monovinyl-, and and methylvinyl-chlorosilanes, and tetra-chlorosilane, with the methyl-substituted silanes being most commonly utilized. Preferred resins are offered by General Electric as GE SS4230 and SS4267. Commercially available silicone resins will generally be supplied in an unhardened form in a low viscosity volatile or nonvolatile silicone fluid. The silicone resins for use herein should be supplied and incorporated into the present compositions in such unhardened form, as will be readily apparent to those skilled in the art.

Background material on silicones including sections discussing silicone fluids, gums, and resins, as well as manufacture of silicones, can be found in Encyclopedia of Polymer Science and Engineering, Volume 15, Second Edition, pp 204-308, John Wiley & Sons, Inc., 1989.

Silicone materials and silicone resins in particular, can conveniently be identified according to a shorthand nomenclature system well known to those skilled in the art as "MDTQ" nomenclature. Under this system, the silicone is described according to presence of various siloxane monomer units which make up the silicone. Briefly, the symbol M denotes the monofunctional unit (CH₃)₃SiO_{0.5}; D denotes the difunctional unit (CH₃)₂SiO; T denotes the trifunctional unit (CH₃)SiO_{1.5}; and Q denotes the quadri- or tetra-functional unit SiO₂. Primes of the unit symbols, e.g., M', D', T', and Q' denote substituents other than methyl, and must be specifically defined for each occurrence. Typical alternate substituents include groups such as vinyl, phenyls, amines, hydroxyls, etc. The molar ratios of the various units, either in terms of subscripts to the symbols indicating the total number of each type of unit in the silicone (or an average thereof) or as specifically indicated ratios in combination with molecular weight complete the description of the silicone material under the MDTQ system. Higher relative molar amounts of T, Q, T' and/or Q' to D, D', M and/or or M' in a silicone resin is indicative of higher levels of crosslinking. As discussed before, however, the overall level of crosslinking can also be indicated by the oxygen to silicon ratio;

The silicone resins for use herein which are preferred are MQ, MT, MTQ, MQ and MDTQ resins. Thus, the preferred silicone substituent is methyl. Especially preferred are MQ resins wherein the M:Q ratio is from about 0.5:1.0 to about 1.5:1.0 and the average molecular weight of the resin is from about 1000 to about 10,000.

The weight ratio of the nonvolatile silicone fluid component to the silicone resin component is from about 4:1 to about 400:1, preferably this ratio is from about 9:1 to about 200:1, more preferably from about 19:1 to about 100:1, particularly when the silicone fluid component is a polydimethylsiloxane fluid or a mixture of polydimethylsiloxane fluid and polydimethylsiloxane gum as described above.

The shampoo will contain a detersive sufactant. These include anionic, cationic, nonionic surfactants, amphoteric surfactants, zwitterionic surfactants. Examples of anionic surfactants are described in U.S. Patent No. 5,573,709. However, the shampoo will typically be essentially free of anionc surfactants, e.g. contain less than 0.5% by weight of species that can properly be characterized as anionic surfactants. If the formulation does not include an anionic surfactant, cationic detersive surfactants can also be used.

Nonionic detersive surfactants which can be used include those broadly defined as compounds produced by the condensation of alkylene oxide groups (hydrophilic in nature) with an organic hydrophobic compound, which may be aliphatic or alkyl aromatic in nature. Examples of preferred classes of nonionic detersive surfactants are:
1. The polyethylene oxide condensates of alkyl phenols, e.g., the condensation products of alkyl phenols having an alkyl group containing from about 6 to about 20 carbon atoms in either a straight chain or branched chain configuration, with ethylene oxide, the said ethylene oxide being present in amounts equal to from about 10 to about 60 moles of ethylene oxide per mole of alkyl phenol. The alkyl substituent in such compounds may be derived from polymerized propylene, diisobutylene, octane, or nonane, for example.
2. Those derived from the condensation of ethylene oxide with the product resulting from the reaction of propylene oxide and ethylene diamine products which may be varied in composition depending upon the balance between thehydrophobic and hydrophilic elements which is desired. For example, compounds containing from about 40% to about 80% polyoxyethylene by weight and having a molecular weight of from about 5,000 to about 11,000 resulting from the reaction of ethylene oxide groups with a hydrophobic base constituted of the reaction product of ethylene diamine and excess propylene oxide, said base having a molecular weight of the order of about 2,500 to about 3,000, are satisfactory.
3. The condensation product of aliphatic alcohols having from about 8 to about 18 carbon atoms, in either straight chain or branched chain configuration, with ethylene oxide, e.g., a coconut alcohol ethylene oxide condensate having from about 10 to about 30 moles of ethylene oxide per mole of coconut alcohol, the coconut alcohol fraction havin from about 10 to about 14 carbon atoms.
4. Long chain tertiary amine oxides corresponding to the following general formula:

   R¹R²R³N-> 0

   wherein R1 contains an alkyl, alkenyl or monohydroxy alkyl radical of from about 8 to about 18 carbon atoms, from 0 to about 10 ethylene oxide moieties, and from 0 to about 1 glyceryl moiety, and R² and R³ contain from about 1 to about 3 carbon atoms and from 0 to about 1 hydroxy group, e.g., methyl, ethyl, propyl, hydroxyethyl, or hydroxypropyl radicals. The arrow in the formula is a conventional representation of a semipolar bond. Examples of amine oxides suitable for use in this invention include dimethyldodecylamine oxide, oleyldi(2-hydroxyethyl) amine oxide, dimethyloctylamine oxide, dimethyl-decylamine oxide, dimethyl-tetradecylamine oxide, 3,6,9-trioxaheptadecyldiethylamine oxide, di(2hydroxyethyl)-tetradecylamine oxide, 2-dodecoxyethyldimethylamine oxide, 3-dodecoxy-2-hydroxypropyldi(3-hydroxypropyl) amine oxide, dimethylhexadecylamine oxide.
5. Long chain tertiary phosphine oxides corresponding to the following general formula:

   RR'R"P -> 0

   wherein R contains an alkyl, alkenyl or monohydroxyalkyl radical ranging from about 8 to about 18 carbon atoms in chain length, from 0 to about 10 ethylene oxide moieties and from 0 to about 1 glyceryl moiety and R' and R" are each alkyl or monohydroxyalkyl groups containing from about 1 to about 3 carbon atoms. The arrow in the formula is a conventional representation of a semipolar bond. Examples of suitable phosphine oxides are: dodecyldimethylphosphine oxide, tetradecyldimethylphosphine oxide, tetradecylmethylethylphosphine oxide. 3,6,9,-trioxaoctadecyldirnethylphosphine oxide, cetyldimethylphosphine oxide, 3-dodecoxy-2-hydroxypropyldi (2-hydroxyethyl) phosphine oxide, stearyldimethylphosphine oxide, cetylethylpropylphosphine oxide, oleyldiethylphosphine oxide, dodecyldiethylphosphine oxide, tetradecyldiethylphosphine oxide, dodecyldipropylphosphine oxide, dodecyldi(hydroxymethyl)phosphine oxide, dodecyldi(2-hydroxyethyl)phosphine oxide, tetradecylmethyl-2-hydroxypropylphosphine oxide, oleydimethylphosphine oxide, 2-hydroxydodecyldimethylphosphine oxide.
6. Long chain dialkyl sulfoxides containing one short chain alkyl or hydroxy alkyl radical of from about 1 to about 3 carbon atoms (usually methyl) and one long hydrophobic chain which include alkyl, alkenyl, hydroxy alkyl, or keto alkyl radicals containing from about 8 to about 20 carbon atoms, from 0 to about 10 ethylene oxide moieties and from 0 to about 1 glyceryl moiety. Examples include: octadecyl methyl sulfoxide, 2-ketotridecyl methyl sulfoxide, 3,6,9,-trixaoctadecyl 2-hydroxyethyl sulfoxide, dodecyl methyl sulfoxide, oleyl 3-hydroxypropyl sulfoxide, tetradecyl methyl sulfoxide, 3-methoxytridecyl methyl sulfoxide, 3-hydroxytridecyl methyl sulfoxide, 3-hydroxy-4-dodecoxybutyl methyl sulfoxide.

Zwitterionic detersive surfactants are exemplified by those which can be broadly described as derivatives of aliphatic quaternary ammonium, phosphonium, and sulfonium compounds, in which the aliphatic radicals can be straight or branched chain, and wherein one of the aliphatic substituents contains from about 8 to about 18 carbon atoms and one contains an anionic group, e.g., carboxy, sulfonate, sulfate, phosphate, or phosphonate. A general formula for these compounds is: found in U.S. Patent No. 5,573,709, wherein R² contains an alkyl, alkenyl, or hydroxy alkyl radical of from about 8 to about 18 carbon atoms, from 0 to about 10 ethylene oxide moieties and from 0 to about 1 glyceryl moiety; Y is selected from the group consisting of nitrogen, phosphorus, and sulfur atoms; R³ is an alkyl or monohydroxyalkyl group containing about 1 to about 3 carbon atoms; X is 1 when Y is a sulfur atom, and 2 when Y is a nitrogen or phosphorus atom; R⁴ is an alkylene or hydroxyalkylene of from about 1 to about 4 carbon atoms and Z is a radical selected from the group consisting of carboxylate, sulfonate, sulfate, phosphonate, and phosphate groups.

Examples of such surfactants include:
4-[N,N-di(2-hydroxyethyl)-N-octadecylammonio]-butane-1-carboxylate;
5-[S-3-hydroxypropyl-S-hexadecylsulfonio]-3-hydroxypentane-1- sulfate;
3-[P,P-diethyl-P-3,6,9-trioxatetradexocylphosphonio]-2-hydroxy-propane-1-phosphate;
3-[N,N-dipropyl-N-3-dodecoxy-2-hydroxypropylammonio]-propane-1-phosphonate;
3-(N,N-dimethyl-N-hexadecylammonio)propane-1-sulfonate;
3-(N,N-dimethyl-N-hexadecylammonio)-2-hydroxypropane-1- sulfonate;
4-[N,N-di(2-hydroxyethyl)-N-(2-hydroxydodecyl)ammonio]-butane-1-carboxylate;
3-[S-ethyl-S-(3-dodecoxy-2-hydroxypropyl)sulfonio]-propane-1-phosphate;
3-[P,P-dimethyl-P-dodecylphosphonio]-propane-1-phosphonate; and
5-[N,N-di(3-hydroxypropyl)-N-hexadecylammonio]-2-hydroxy-pentane-1-sulfate.

Other zwitterionics such as betaines can also useful in the present invention. Examples of betaines useful herein include the high alkyl betaines, such as coco dimethyl carboxymethyl betaine, cocoamidopropyl betaine, cocobetaine, lauryl amidopropyl betaine, oleyl betaine, lauryl dimethyl carboxymethyl betaine, lauryl dimethyl alphacarboxyethyl betaine, cetyl dimethyl carboxymethyl betaine, lauryl bis-(2-hydroxyethyl) carboxymethyl betaine, stearyl bis-(2-hydroxypropyl) carboxymethyl betaine, oleyl dimethyl gamma-carboxypropyl betaine, and lauryl bis-(2-hydroxypropyl)alpha-carboxyethyl betaine. The sulfobetaines may be represented by coco dimethyl sulfopropyl betaine, stearyl dimethyl sulfopropyl betaine, lauryl dimethyl sulfoethyl betaine, lauryl bis-(2-hydroxyethyl) sulfopropyl betaine and the 1 like; amidobetaines and amidosulfobetaines, wherein the RCONH(CH₂)₃ radical is attached to the nitrogen atom of the betaine are also useful in this invention. Preferred betaines for use in the present compositions are cocoamidopropyl betaine, cocobetaine, lauryl amidopropyl betaine, and oleyl betaine.

Examples of amphoteric detersive surfactants which can be used in the compositions of the present invention are those which are broadly described as derivatives of aliphatic secondary and tertiary amines in which the aliphatic radical can be straight or branched chain and wherein one of the aliphatic substituents contains from about 8 to about 18 carbon atoms and one contains an anionic water solubilizing group, e.g., carboxy, sulfonate, sulfate, phosphate, or phosphonate. Examples of compounds falling within this definition are sodium 3-dodecyl -aminopropionate, sodium 3-dodecylaminopropane sulfonate, sodium lauryl sarcosinate, N-alkyltaurines such as the one prepared by reacting dodecylamine with sodium isethionate according to the teaching of U.S. Pat. No. 2,658,072, N-higher alkyl aspartic acids such as those produced according to the teaching of U.S. Pat. No. 2,438,091, and the products sold under the trade name "MIRANOL" TM and described in U.S. Pat. No. 2,528,378. Another detersive surfactant optional for use in the compositions of the present invention is cocoamphocarboxy glycinate.

The most preferred shampoos of the present invention contain combinations of amphoteric surfactants, zwitterionic surfactants, and nonionic surfactants and are essentially free of anionic surfactants. The shampoos typically contain from about 0% to about 6% of amphoteric surfactants, about 0% to about 8% of zwitterionic surfactants, from 0% to about 14% of ethoxylated alkyl sulfates, and from about 0% to about 10% of an optional anionic surfactant surfactants, e.g. about 3% to about 7% alkyl sulfates, with a total surfactant level of from about 10% to about 25%.

The formulated shampoo and soap systems of the present invention can contain a variety of non-essential optional components suitable for rendering such compositions more acceptable. Such conventional optional ingredients are well known to those skilled in the art, e.g., preservatives such as benzyl alcohol, methyl paraben, propyl paraben and imidazolidinyl urea; cationic surfactants such as cetyl trimethyl ammonium chloride, lauryl trimethyl ammonium chloride, tricetyl methyl ammonium chloride, stearyldimethyl benzyl ammonium chloride, and di(partially hydrogenated tallow)dimethylammonium chloride; thickeners and viscosity modifiers such as block polymers of ethylene oxide and propylene oxide, e.g. ANTAROX F-88 (Rhone-Poulenc Inc.), sodium chloride, sodium sulfate, polyvinyl alcohol, and ethyl alcohol; pH adjusting agents such as citric acid, succinic acid, phosphoric acid, sodium hydroxide, sodium carbonate; perfumes; dyes; and sequestering agents such as disodium ethylenediamine tetra-acetate. Such agents generally are used individually at levels of from about 0.01% to about 10%, preferably from 0.5% to about 5.0% by weight of the composition.

Shampoos may also include antidandruff agents such as pyrithione salts, preferably zinc pyrithione, as disclosed by PCT application number PCT/US98/04139, filed March 4, 1998 and published as WO 98/41505.

### Hair Removal Personal Care Products

The zwitterionic polymeric suds stabilizer (foam enhancer) of the present invention may also be employed with foam forming shaving gels and shaving creams. Typical foaming shaving gels are disclosed by U.S. Patent Nos. 5,902,778 to Hartmann, et al; 5,858,343 to Szymczak; and 5,853,710 to Dehan, et al. Typical foam shaving creams are disclosed by U.S. Patent Nos. 5,686,024 to Dahanayake, et al; 5,415,860 to Beucherie, et al; 5,902,574 to Stoner, et al; and 5,104,643 to Grollier, et al.

The foam enhancer is also useful in a foam dephilatory. An example of a foam dephilatory is disclosed in U.S. Patent No. 4,734,099 to Cyprien.

### COMPOSITIONS AND METHODS OF USE FOR LAUNDRY DETERGENTS

In addition to the zwitterionic polymeric suds stabilizers of the present invention used as soil release agents, laundry detergents of the present invention further include adjunct ingredients. A variety of such adjunct laundry detergent ingredients are disclosed by PCT International Publication No. WO 98/39401.

In general, the laundry detergent compositions are liquid and comprise a major amount by weight of detergent and a minor amount of the soil release polymer of the present invention. Also, in general the method for washing fabric of the present invention comprises washing a fabric article in a washing medium comprised of a major amount by weight of water and a first minor amount by weight of detergent and a second minor amount by weight of the soil release polymer. Minor amounts of adjunct components may also be present.

### I. Aminoalkyl/alkoxysilane-silicone Compounds

One of the adjunct components of the compositions and methods of this invention is an aminosilicone compound, typically an aminosilicone compound of the formula: 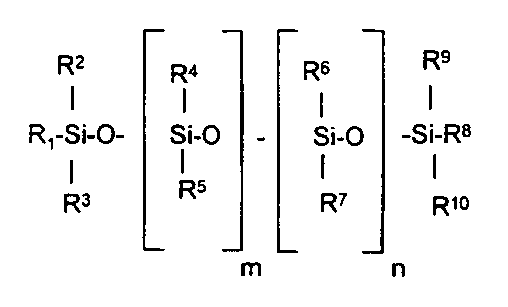 wherein:
R¹ and R⁸ are independently selected from the group consisting of hydrogen, hydroxyl, alkyl (typically C₁-C₄) and alkoxy (typically C₁-C₄),
R², R³, R⁹, and R¹⁰ are independently selected from the group consisting of alkyl (typically C₁-C₄) and alkoxy (typically C₁-C₄), provided that one of R², R³, R⁹, and R¹⁰ may be selected from the group consisting of a primary amino-substituted alkyl group, and a secondary amino-substituted, alkyl group (typically an N-(amino-alkyl)-substituted aminoalkyl group such that the compound will have both primary and secondary amine functionality),
R⁴, R⁵, and R⁶ are independently selected from the group consisting of alkyl (typically C₁-C₄) and aryl (typically phenyl),
R⁷ is selected from the group consisting of a primary amino-substituted alkyl group, and a secondary amino-substituted alkyl group (typically an N-(aminoalkyl)-substituted aminoalkyl group such that the compound will have both primary and secondary amine functionality),
m and n are numbers wherein m is greater than n (typically the ratio of m:n is from about 2:1 to about 500:1, more typically from about 40:1 to about 300:1 and most typically from about 85:1 to about 185:1) and the sum of n and m yield an aminosilicone compound with a viscosity of about 10 to about 100,000 cps at 25° (typically the sum of n and m is from about 5 to about 600, more typically from about 50 to about 400 and most typically from about 135 to about 275).

The preparation and properties of silicone compounds is discussed generally in Silicones: Chemistry and Technology pp. 21-31 and 75-90 (CRC Press, Vulkan- Verlag, Essen, Germany, 1991) and in Harman et al. "Silicones", Encyclopedia of Polymer Science and Engineering, vol. 15, pp. (John Wiley & Sons, Inc. 1989). Preferred aminosilicone compounds are disclosed, for example in JP-047547 (J57161170) (Shinetsu Chem. Ind. KK). Particularly preferred aminosilicone compounds are the three of formula I wherein (1) R¹ and R⁸ are methoxy, R², R³, R⁴, R⁵, R⁶, R⁹, and R¹⁰ are methyl, R⁷ is N-aminoethyl-3-aminopropyl, m is about 135, and n is about 1.5, (2) R¹ and R⁸ are methoxy, R², R³, R⁴, R⁵, R⁶, R⁹, and R¹⁰ are methyl, R⁷ is N-aminoethyl-3-aminopropyl, m is about 270, and n is about 1.5, and (3) R¹ and R⁸ are ethoxy, R², R³, R⁴, R⁵, R⁶, R⁹, and R¹⁰ are methyl, R⁷ is 3-aminopropyl, m is about 135, and n is about 1.5. Other aminosilicone compounds include those wherein R¹, R², and R⁸ are ethoxy, R³ is 3-aminopropyl, R⁴, R⁵, R⁶, R⁹, and R¹⁰ are methyl, m is about 8, and n is zero. Of course, for pure aminosilicone compounds, the numbers m and n will be integers, but for mixtures of compounds, m and n will be expressed as fractions or compound numbers which represent an average of the compounds present. Further, the formula above is not meant to imply a block copolymer structure, thus, the aminosilicone compound may have a random or block structure. Typically, at least about 50% by weight of the R⁴, R⁵, and R⁶ groups will be methyl groups, more typically at least about 90% and even more typically about 100%.

The aminosilicone compound typically will be in the form of a liquid or viscous oil at room temperature.

The aminosilicones described below in the context of the soluble powder detergent compositions can be substituted for the aminosilicones described above.

### II. Insoluble Carriers

While the aminosilicone can be used in certain compositions and methods of this invention alone or as an aqueous emulsion, the aminosilicone is preferably used in association with a water-insoluble solid carrier, for example, clays, natural or synthetic silicates, silica, resins, waxes, starches, ground natural minerals, such as kaolins, clays, talc, chalk, quartz, attapulgite, montmorillonite, bentonite or diatomaceous earth, or ground synthetic minerals, such as silica, alumina, or silicates especially aluminum or magnesium silicates. Useful inorganic agents comprise those of natural or synthetic mineral origin. Specific examples of carriers include diatomaceous earths, e.g. Celite Registered TM (Johns Manville Corp., Denver, Col.) and the smectite clays such as the saponites and the montmorillonite colloidal clays such as Veegum Registered TM and Van Gel Registered TM (Vanderbilt Minerals, Murray, KY), or Magnabrite Registered TM (American Colloid Co., Skokie, IL). Synthetic silicate carriers include the hydrous calcium silicate, Micro-Cel Registered TM and the hydrous magnesium silicate Celkate Registered TM (Seegot, Inc., Parsippany, NJ). Inosilicates carriers such as the naturally-occurring calcium meta-silicates such as wollastonite, available as the NYAD Registered TM wollastonite series (Processed Minerals Inc., Willsboro, NY) can also be mentioned. Synthetic sodium magnesium silicate clays, hectorite clays, and fumed silicas can also be mentioned as carriers. The carrier can be a very finely divided material of average particle diameter below 0.1 micron. Examples of such carriers are fumed silica and precipitated silica; these generally have a specific surface (BET) of above 40 m² /g.

The clays that are particularly useful elements of the compositions and methods of this invention are those which cooperate with the silicone compounds to wash laundry better than would be expected from the actions of the individual components in detergent compositions. Such clays include the montmorillonite-containing clays which have swelling properties (in water) and which are of smectite structure. Typical of the smectite clays for use in the present invention is bentonite and typically the best of the bentonites are those which have a substantial swelling capability in water, such as the sodium bentonites, the potassium bentonites, or which are swellable in the presence of sodium or potassium ions, such as calcium bentonite. Such swelling bentonites are also known as western or Wyoming bentonites, which are essentially sodium bentonite. Other bentonites, such as calcium bentonite, are normally non-swelling. Among the preferred bentonites are those of sodium and potassium, which are normally swelling, and calcium and magnesium, which are normally non-swelling, but are swellable. Of these it is preferred to utilize calcium (with a source of sodium being present) and sodium bentonites. The bentonites employed are not limited to those produced in the United States of America, such as Wyoming bentonite, but also may be obtained from Europe, including Italy and Spain, as calcium bentonite, which may be converted to sodium bentonite by treatment with sodium carbonate, or may be employed as calcium bentonite. Typically, the clay will have a high montmorillonite content and a low content of cristobalite and/or quartz. Also, other montmorillonite-containing smectite clays of properties like those of the bentonites described may be substituted in whole or in part for the bentonites described herein, but typically the clay will be a sodium bentonite with high montmorillonite content and low cristobalite and quartz contents.

The swellable bentonites and similarly operative clays are of ultimate particle sizes in the micron range, e.g., 0.01 to 20 microns and of actual particle sizes less than 100 or 150 microns, such as 40 to 150 microns or 45 to 105 microns. Such size ranges also apply to the zeolite builders, which will be described later herein. The bentonite and other such suitable swellable clays may be agglomerated to larger particle sizes too, such as up to 2 or 3 mm. in diameter.

The ratio of aminosilicone compound to carrier will typically range from about 0.001 to about 2, more typically from about 0.02 to about 0.5, and most typically from about 0.1 to about 0.3.

### III. Detergents

The methods and compositions of this laundry detergent invention all employ a detergent, and optionally, other functional ingredients. Examples of the detergents and other functional ingredients that can be used are disclosed in U.S. Serial No. 08/726,437, filed October 4, 1996. The detergent can be selected from a wide variety of surface active agents.

### A. Nonionic Surfactants

Nonionic surfactants, including those having an HLB of from 5 to 17, are well known in the detergency art. Examples of such surfactants are listed in U.S. Patent No. 3,717,630, Booth, issued February 20, 1973, and U. S. Patent No. 3,332,880, Kessler et al., issued July 25, 1967, each of which is incorporated herein by reference. Nonlimiting examples of suitable nonionic surfactants which may be used in the present invention are as follows:
(1) The polyethylene oxide condensates of alkyl phenols. These compounds include the condensation products of alkyl phenols having an alkyl group containing from about 6 to 12 carbon atoms in either a straight chain or branched chain configuration with ethylene oxide, said ethylene oxide being present in an amount equal to 5 to 25 moles of ethylene oxide per mole of alkyl phenol. The alkyl substituent in such compounds can be derived, for example, from polymerized propylene, diisobutylene, and the like. Examples of compounds of this type include nonyl phenol condensed with about 9.5 moles of ethylene oxide per mole of nonyl phenol; dodecylphenol condensed with about 12 moles of ethylene oxide per mole of phenol; dinonyl phenol condensed with about 15 moles of ethylene oxide per mole of phenol; and diisooctyl phenol condensed with about 15 moles of ethylene oxide per mole of phenol. Commercially available nonionic surfactants of this type include Igepal CO-630, marketed by Rhone-Poulenc Inc. and Triton X-45, X-114, X-100, and X-102, all marketed by Union Carbide.
(2) The condensation products of aliphatic alcohols with from about 1 to about 25 moles of ethylene oxide. The alkyl chain of the aliphatic alcohol can either be straight or branched, primary or secondary, and generally contains from about 8 to about 22 carbon atoms. Examples of such ethoxylated alcohols include the condensation product of myristyl alcohol condensed with about 10 moles of ethylene oxide per mole of alcohol; and the condensation product of about 9 moles of ethylene oxide with coconut alcohol (a mixture of fatty alcohols with alkyl chains varying in length from 10 to 14 carbon atoms). Examples of commercially available nonionic surfactants in this type include Tergitol 15-S-9, marketed by Union Carbide Corporation, Neodol 45-9, Neodol 23-6.5, Neodol 45-7, and Neodol 45-4, marketed by Shell Chemical Company.
(3) The condensation products of ethylene oxide with a hydrophobic base formed by the condensation of propylene oxide with propylene glycol. The hydrophobic portion of these compounds typically has a molecular weight of from about 1500 to 1800 and exhibits water insolubility. The addition of polyoxyethylene moieties to this hydrophobic portion tends to increase the water solubility of the molecule as a whole, and the liquid character of the product is retained up to the point where the polyoxyethylene content is about 50% of the total weight of the condensation product, which corresponds to condensation with up to about 40 moles of ethylene oxide. Examples of compounds of this type include certain of the commercially available Pluronic surfactants, marketed by Wyandotte Chemical Corporation.
(4) The condensation products of ethylene oxide with the product resulting from the reaction of propylene oxide and ethylenediamine. The hydrophobic moiety of these products consists of the reaction product of ethylenediamine and excess propylene oxide, said moiety having a molecular weight of from about 2500 to about 3000. This hydrophobic moiety is condensed with ethylene oxide to the extent that the condensation product contains from about 40% to about 80% by weight of polyoxyethylene and has a molecular weight of from about 5,000 to about 11,000. Examples of this type of nonionic surfactant include certain of the commercially available Tetronic compounds, marketed by Wyandotte Chemical Corporation.
(5) Semi-polar nonionic detergent surfactants include water-soluble amine oxides containing one alkyl moiety of from about 10 to 18 carbon atoms and 2 moieties selected from the group consisting of alkyl groups and hydroxyalkyl groups containing from 1 to about 3 carbon atoms; water-soluble phosphine oxides containing one alkyl moiety of about 10 to 18 carbon atoms and 2 moieties selected from the group consisting of alkyl groups and hydroxyalkyl groups containing from about 1 to 3 carbons atoms; and water-soluble sulfoxides containing one alkyl moiety of from about 10 to 18 carbon atoms and a moiety selected from the group consisting of alkyl and hydroxyalkyl moieties of from about 1 to 3 carbon atoms.

Preferred semi-polar nonionic detergent surfactants are the amine oxide detergent surfactants having the formula 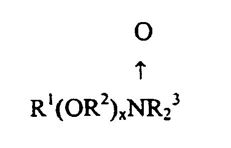 wherein R¹ is an alkyl, hydroxy alkyl, or alkyl phenyl group or mixtures thereof containing from about 8 to about 22 carbon atoms. R² is an alkylene or hydroxy alkylene group containing from 2 to 3 carbon atoms or mixtures thereof, x is from 0 to about 3 and each R³ is an alkyl or hydroxy alkyl group containing from 1 to about 3 carbon atoms or a polyethylene oxide group containing from one to about 3 ethylene oxide groups and said R³ groups can be attached to each other, e.g., through an oxygen or nitrogen atom to form a ring structure.

Preferred amine oxide detergent surfactants are C₁₀-C₁₈ alkyl dimethyl amine oxide, C₈-C₁₈ alkyl dihydroxy ethyl amine oxide, and C₈₋₁₂ alkoxy ethyl dihydroxy-ethyl amine oxide.

Nonionic detergent surfactants (1)-(4) are conventional ethoxylated nonionic detergent surfactants and mixtures thereof can be used.

Preferred alcohol ethoxylate nonionic surfactants for use in the compositions of the liquid, powder, and gel applications are biodegradable and have the formula

R(OC₂H₄)ₙOH

wherein R is a primary or secondary alkyl chain of from about 8 to about 22, preferably from about 10 to about 20 carbon atoms and n is an average of from about 2 to about 12, particularly from about 2 to about 9. The nonionics have an HLB (hydrophilic-lipophilic balance) of from about 5 to about 17, preferably from about 6 to about 15. HLB is defined in detail in Nonionic Surfactants, by M. J. Schick, Marcel Dekker, Inc., 1966, pages 606-613, incorporated herein by reference. In preferred nonionic surfactants, n is from 3 to 7. Primary linear alcohol ethoxylates (e.g., alcohol ethoxylates produced from organic alcohols which contain about 20% 2-methyl branched isomers, commercially available from Shell Chemical Company under the trademark Neodol) are preferred from a performance standpoint.

Particularly preferred nonionic surfactants for use in liquid, powder, and gel applications include the condensation product of C₁₀ alcohol with 3 moles of ethylene oxide; the condensation product of tallow alcohol with 9 moles of ethylene oxide; the condensation product of coconut alcohol with 5 moles of ethylene oxide; the condensation product of coconut alcohol with 6 moles of ethylene oxide; the condensation product of C₁₂ alcohol with 5 moles of ethylene oxide; the condensation product of C₁₂₋₁₃ alcohol with 6.5 moles of ethylene oxide, and the same condensation product which is stripped so as to remove substantially all lower ethoxylate and nonethoxylated fractions; the condensation product of C₁₂₋₁₃ alcohol with 2.3 moles of ethylene oxide, and the same condensation product which is stripped so as to remove substantially all lower ethoxylated and nonethoxylated fractions; the condensation product of C₁₂₋₁₃ alcohol with 9 moles of ethylene oxide; the condensation product of C₁₄₋₁₅ alcohol with 2.25 moles of ethylene oxide; the condensation product of C₁₄₋₁₅ alcohol with 4 moles of ethylene oxide; the condensation product of C₁₄₋₁₅ alcohol with 7 moles of ethylene oxide; and the condensation product of C₁₄₋₁₅ alcohol with 9 moles of ethylene oxide. For bar soap applications, nonionic surfactants are preferably solids at room temperature with a melting point above about 25° C., preferably above about 30° C. Bar compositions of the present invention made with lower melting nonionic surfactants are generally too soft, not meeting the bar firmness requirements of the present invention.

Also, as the level of nonionic surfactant increases, i.e., above about 20% by weight of the surfactant, the bar can generally become oily.

Examples of nonionic surfactants usable herein, but not limited to bar applications, include fatty acid glycerine and polyglycerine esters, sorbitan sucrose fatty acid esters, polyoxyethylene alkyl and alkyl allyl ethers, polyoxyethylene lanolin alcohol, glycerine and polyoxyethylene glycerine fatty acid esters, polyoxyethylene propylene glycol and sorbitol fatty acid esters, polyoxyethylene lanolin, castor oil or hardened castor oil derivatives, polyoxyethylene fatty acid amides, polyoxyethylene alkyl amines, alkylpyrrolidone, glucamides, alkylpolyglucosides, and mono- and dialkanol amides.

Typical fatty acid glycerine and polyglycerine esters, as well as typical sorbitan sucrose fatty acid esters, fatty acid amides, and polyethylene oxide/polypropylene oxide block copolymers are disclosed by U.S. Patent No. 5,510,042, Hartman et al.

The castor oil derivatives are typically ethoxylated castor oil. It is noted that other ethoxylated natural fats, oils or waxes are also suitable.

Polyoxyethylene fatty acid amides are made by ethoxylation of fatty acid amides with one or two moles of ethylene oxide or by condensing mono-or diethanol amines with fatty acid.

Polyoxyethylene alkyl amines include those of formula: RNH-(CH₂CH₂O)ₙ-H, wherein R is C₆ to C₂₂ alkyl and n is from 1 to about 100.

Monoalkanol amides include those of formula: RCONHR'OH, wherein R is C₆-C₂₂ alkyl and R¹ is C₁ to C₆ alkylene. Dialkanol amides are typically mixtures of:
diethanolamide: RCON(CH₂CH₂OH)₂;
amide ester: RCON(CH₂CH₂OH)-CH₂CH₂OOCR;
amine ester: RCOOCH₂CH₂NHCH₂CH₂OH; and
amine soap: RCOOH₂N(CH₂CH₂OH)₂,
wherein R in the above formulas is an alkyl of from 6 to 22 carbon atoms.

Examples of preferred but not limiting surfactants for detergent bar products are the following

### Straight-Chain Primary Alcohol Alkoxylates

The deca-, undeca-, dodeca-, tetradeca-, and pentadeca-ethoxylates of n-hexadecanol, and n-hexadecanol, and n-octadecanol having an HLB within the range recited herein are useful nonionics in the context of this invention. Exemplary ethoxylated primary alcohols useful herein as the conventional nonionic surfactants of the compositions are n-C₁₈EO(10); n-C₁₄EO(13); and n-C₁₀EO(11). The ethoxylates of mixed natural or synthetic alcohols in the "tallow" chain length range are also useful herein. Specific examples of such materials include tallow-alcohol-EO(11), tallow-alcohol-EO(18), and tallow-alcohol-EO(25).

### Straight-Chain Secondary Alcohol Alkoxylates

The deca-, undeca-, dodeca-, tetradeca-, pentadeca-, octadeca-, and nonadeca-ethoxylates of 3-hexadecanol, 2-octadecanol, 4-eicosanol, and 5-eicosanol having an HLB within the range recited herein are useful conventional nonionics in the context of this invention. Exemplary ethoxylated secondary alcohols useful herein are 2-C₁₆EO(11); 2-C₂₀EO(11); and 2-C₁₆EO(14).

### Alkyl Phenol Alkoxylates

As in the case of the alcohol alkoxylates, the hexa- through octadeca-ethoxylates of alkylated phenols, particularly monohydric alkylphenols, having an HLB within the range recited herein are useful as conventional nonionic surfactants in the instant compositions. The hexa- through octadeca-ethoxylates of p-tridecylphenol, m-pentadecylphenol, and the like, are useful herein. Exemplary ethoxylated alkylphenols useful in the mixtures herein are: p-tridecylphenol EO(11) and p-pentadecylphenol EO(18). Especially preferred is Nonyl Nonoxynol-49 known as Igepal^{®} DM-880 from Rhone-Poulenc Inc.

As used herein and as generally recognized in the art, a phenylene group in the nonionic formula is the equivalent of an alkylene group containing from 2 to 4 carbon atoms. For present purposes, nonionics containing a phenylene group are considered to contain an equivalent number of carbon atoms calculated as the sum of the carbon atoms in the alkyl group plus about 3.3 carbon atoms for each phenylene group.

### Olefinic Alkoxylates

The alkenyl alcohols, both primary and secondary, and alkenyl phenols corresponding to those disclosed immediately hereinabove can be ethoxylated to an HLB within the range recited herein and used as the conventional nonionic surfactants of the instant compositions.

### Branched Chain Alkoxylates

Branched chain primary and secondary alcohols which are available can be ethoxylated and employed as conventional nonionic surfactants in compositions herein.

The above ethoxylated nonionic surfactants are useful in the present compositions alone or in combination, and the term "nonionic surfactant" encompasses mixed nonionic surface active agents.

### Alkylpolysaccharides

Still further suitable nonionic surfactants of this invention include alkylpolysaccharides, preferably alkylpolyglycosides of the formula:

RO(CₙH₂ₙO)ₜ(Z)ₓ

wherein
Z is derived from glycose;
R is a hydrophobic group selected from the group consisting of a C₁₀-C₁₈, preferably a C₁₂-C₁₄, alkyl group, alkyl phenyl group, hydroxyalkyl group, hydroxyalkylphenyl group, and mixtures thereof;
n is 2 or 3; preferably 2;
t is from 0 to 10; preferably 0; and
x is from 1.5 to 8; preferably 1.5 to 4; more preferably from 1.6 to 2.7.

These surfactants are disclosed in U.S. Patent Nos. 4,565,647, Llenado, issued January 21, 1986; 4,536,318, Cook et al., issued August 20, 1985; 4,536,317, Llenado et al., issued August 20, 1985; 4,599,188 Llenado, issued July 8, 1986; and 4,536,319, Payne, issued August 20, 1985.

The compositions of the present invention can also comprise mixtures of the above nonionic surfactants.

A thorough discussion of nonionic surfactants for detergent bar and liquid products is presented by U.S. Patent Nos. 5,510,042, Hartman et al., and 4,483,779, Llenado, et al.

### B. Anionic Surfactants

Anionic surfactants include any of the known hydrophobes attached to a carboxylate, sulfonate, sulfate or phosphate polar, solubilizing group including salts. Salts may be the sodium, potassium, ammonium and amine salts of such surfactants. Useful anionic surfactants can be organic sulfuric reaction products having in their molecular structure an alkyl group containing from about 8 to about 22 carbon atoms and a sulfonic acid or sulfuric acid ester group, or mixtures thereof. (Included in the term "alkyl" is the alkyl portion of acyl groups.) Examples of this group of synthetic detersive surfactants which can be used in the present invention are the alkyl sulfates, especially those obtained by sulfating the higher alcohols (C₈-C₁₈ carbon atoms) produced from the glycerides of tallow or coconut oil; and alkyl benzene sulfonates.

Other useful anionic surfactants herein include the esters of alpha-sulfonated fatty acids preferably containing from about 6 to 20 carbon atoms in the ester group; 2-acyloxyalkane-1-sulfonic acids preferably containing from about 2 to 9 carbon atoms in the acyl group and from about 9 to about 23 carbon atoms in the alkane moiety; alkyl ether sulfates preferably containing from about 10 to 20 carbon atoms in the alkyl group and from about 1 to 30 moles of ethylene oxide; olefin sulfonates preferably containing from about 12 to 24 carbon atoms; and beta-alkyloxy alkane sulfonates preferably containing from about 1 to 3 carbon atoms in the alkyl group and from about 8 to 20 carbon atoms in the alkane moiety.

Anionic surfactants based on the higher fatty acids, i.e., "soaps" are useful anionic surfactants herein. Higher fatty acids containing from about 8 to about 24 carbon atoms and preferably from about 10 to about 20 carbon atoms and the coconut and tallow soaps can also be used herein as corrosion inhibitors.

Preferred water-soluble anionic organic surfactants herein include linear alkyl benzene sulfonates containing from about 10 to about 18 carbon atoms in the alkyl group; branched alkyl benzene sulfonates containing from about 10 to about 18 carbon atoms in the alkyl group; the tallow range alkyl sulfates; the coconut range alkyl glyceryl sulfonates; alkyl ether (ethoxylated) sulfates wherein the alkyl moiety contains from about 12 to 18 carbon atoms and wherein the average degree of ethoxylation varies between 1 and 12, especially 3 to 9; the sulfated condensation products of tallow alcohol with from about 3 to 12, especially 6 to 9, moles of ethylene oxide; and olefin sulfonates containing from about 14 to 16 carbon atoms.

Specific preferred anionics for use herein include: the linear C₁₀-C₁₄ alkyl benzene sulfonates (LAS); the branched C₁₀-C₁₄ alkyl benzene sulfonates (ABS); the tallow alkyl sulfates, the coconut alkyl glyceryl ether sulfonates; the sulfated condensation products of mixed C₁₀-C₁₈ tallow alcohols with from about 1 to about 14 moles of ethylene oxide; and the mixtures of higher fatty acids containing from 10 to 18 carbon atoms.

It is to be recognized that any of the foregoing anionic surfactants can be used separately herein or as mixtures. Moreover, commercial grades of the surfactants can contain non-interfering components which are processing by-products. For example, commercial alkaryl sulfonates, preferably C₁₀-C₁₄, can comprise alkyl benzene sulfonates, alkyl toluene sulfonates, alkyl naphthalene sulfonates and alkyl polybenzenoid sulfonates. Such materials and mixtures thereof are fully contemplated for use herein.

Other examples of,the anionic surfactants used herein include fatty acid soaps, ether carboxylic acids and salts thereof, alkane sulfonate salts, α-olefin sulfonate salts, sulfonate salts of higher fatty acid esters, higher alcohol sulfate ester or ether ester salts, alkyl, preferably higher alcohol phosphate ester and ether ester salts, and condensates of higher fatty acids and amino acids.

Fatty acid soaps include those having the formula: R-C(O)OM, wherein R is C₆ to C₂₂ alkyl and M is preferably sodium.

Salts of ether carboxylic acids and salts thereof include those having the formula: R-(OR¹)ₙ-OCH₂C(O)OM, wherein R is C₆ to C₂₂ alkyl, R¹ is C₂ to C₁₀, preferably C₂ alkyl, and M is preferably sodium.

Alkane sulfonate salts and α-olefin sulfonate salts have the formula: R-SO₃M, wherein R is C₆ to C₂₂ alkyl or α-olefin, respectively, and M is preferably sodium.

Sulfonate salts of higher fatty acid esters include those having the formula:

RC(O)O-R¹-SO₃M,

wherein R is C₁₂ to C₂₂ alkyl, R¹ is C₁ to C₁₈ alkyl and M is preferably sodium.

Higher alcohol sulfate ester salts include those having the formula: RC(O)O-R¹-OSO₃M,
wherein R is C₁₂-C₂₂ alkyl, R¹ is C₁-C₁₈ hydroxyalkyl, M is preferably sodium.

Higher alcohol sulfate ether ester salts include those having the formula:

RC(O)(OCH₂CH₂)ₓ-R¹-OSO₃M,

wherein R is C₁₂-C₂₂ alkyl, R¹ is C₁-C₁₈ hydroxyalkyl, M is preferably sodium and x is an integer from 5 to 25.

Higher alcohol phosphate ester and ether ester salts include compounds of the formulas:

R-(OR¹)ₙ-OPO(OH)(OM);

(R-(OR¹)ₙ-O)₂PO(OM);

and

(R-(OR¹)ₙ-O)₃-PO,

wherein R is alkyl or hydroxyalkyl of 12 to 22 carbon atoms, R¹ is C₂H₄, n is an integer from 5 to 25, and M is preferably sodium.

Other anionic surfactants herein are sodium coconut oil fatty acid monoglyceride sulfonates and sulfates; sodium or potassium salts of alkyl phenol ethylene oxide ether sulfates containing from about 1 to about 10 units of ethylene oxide per molecule and wherein the alkyl groups contain from about 8 to about 12 carbon atoms; and sodium or potassium salts of alkyl ethylene oxide ether sulfates containing about 1 to about 10 units of ethylene oxide per molecule and wherein the alkyl group contains from about 10 to about 20 carbon atoms.

### C. Cationic Surfactants

Preferred cationic surfactants of the present invention are the reaction products of higher fatty acids with a polyamine selected from the group consisting of hydroxyalkylalkylenediamines and dialkylenetriamines and mixtures thereof.

A preferred component is a nitrogenous compound selected from the group consisting of:
(i) the reaction product mixtures of higher fatty acids with hydroxyalkylalkylenediamines in a molecular ratio of about 2:1, said reaction product containing a composition having a compound of the formula: 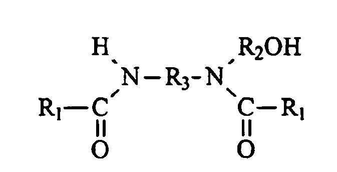 wherein R₁ is an acyclic aliphatic C₁₅-C₂₁ hydrocarbon group and R₂ and R₃ are divalent C₁-C₃ alkylene groups; commercially available as Mazamide 6 from PPG;
(ii) the reaction product of higher fatty acids with dialkylenetriamines in a molecular ratio of about 2:1; said reaction product containing a composition having a compound of the formula: 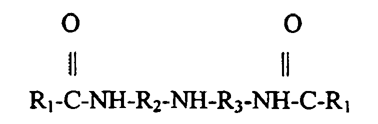
wherein R₁, R₂ and R₃ are as defined above; and mixtures thereof.

Another preferred component is a cationic nitrogenous salt containing one long chain acyclic aliphatic C₁₅-C₂₂ hydrocarbon group selected from the group consisting of:
(i) acyclic quaternary ammonium salts having the formula: 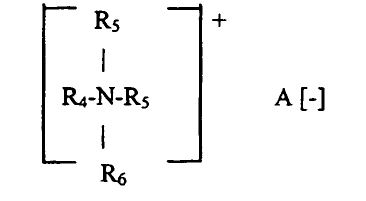 wherein R₄ is an acyclic aliphatic C₁₅-C₂₂ hydrocarbon group, R₅ and R₆ are C₁-C₄ saturated alkyl or hydroxyalkyl groups, and A [-] is an anion, especially as described in more detail hereinafter, examples of these surfactants are sold by Sherex Chemical Company under the Adgen trademarks;
(ii) substituted imidazolinium salts having the formula: 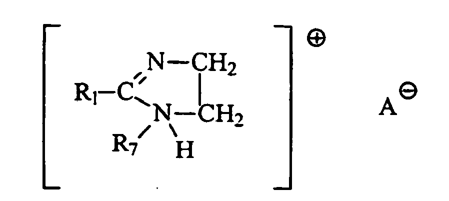 wherein R₁ is an acyclic aliphatic C₁₅-C₂₁ hydrocarbon group, R₇ is a hydrogen or a C₁-C₄ saturated alkyl or hydroxyalkyl group, and A [-] is an anion;
(iii) substituted imidazolinium salts having the formula: 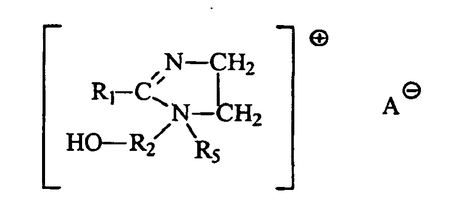 wherein R₂ is a divalent C₁-C₃ alkylene group and R₁, R₅ and A [-] are as defined above; an example of which is commercially available under the Monaquat ISIES trademark from Mona Industries, Inc.;
(iv) alkylpyridinium salts having the formula: 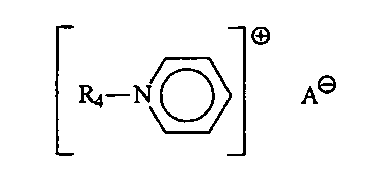 wherein R₄ is an acyclic aliphatic C₁₆-C₂₂ hydrocarbon group and A [-] is an anion; and
(v) alkanamide alkylene pyridinium salts having the formula: 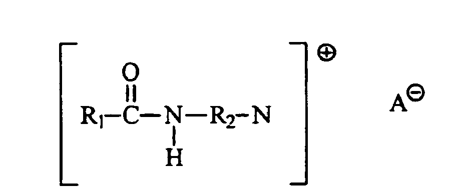
wherein R₁ is an acyclic aliphatic C₁₅-C₂₁ hydrocarbon group, R₂ is a divalent C₁-C₃ alkylene group, and A [-] is an anion group; and mixtures thereof.

Another class of preferred cationic nitrogenous salts having two or more long chain acyclic aliphatic C₁₅-C₂₂ hydrocarbon groups or one said group and an arylalkyl group are selected from the group consisting of:
(i) acyclic quaternary ammonium salts having the formula: 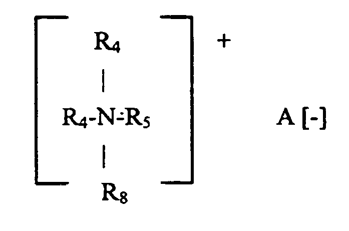 wherein each R₄ is an acyclic aliphatic C₁₅-C₂₂ hydrocarbon group, R₅ is a C₁-C₄ saturated alkyl or hydroxyalkyl group, R₈ is selected from the group consisting of R₄ and R₅ groups, and A [-] is an anion defined as above; examples of which are commercially available from Sherex Company under the Adgen trademarks;
(ii) diamido quaternary ammonium salts having the formula: 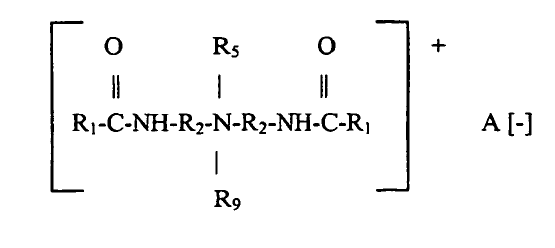 wherein each R₁ is an acyclic aliphatic C₁₅-C₂₁ hydrocarbon group, R₂ is a divalent alkylene group having 1 to 3 carbon atoms, R₅ and R₉ are C₁-C₄ saturated alkyl or hydroxyalkyl groups, and A [-] is an anion; examples of which are sold by Sherex Chemical Company under the Varisoft trademark;
(iii) diamino alkoxylated quaternary ammonium salts having the formula: 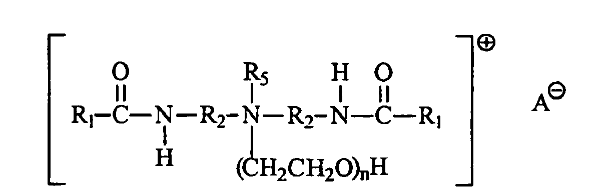 wherein n is equal to 1 to about 5, and R₁, R₂, R₅ and A [-] are as defined above;
(iv) quaternary ammonium compounds having the formula: 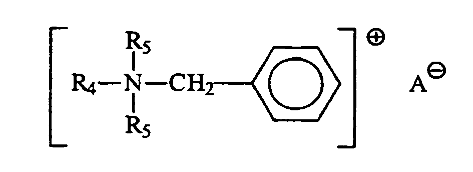 wherein each R₄ is an acyclic aliphatic C₁₅-C₂₂ hydrocarbon group, each R₅ is a C₁-C₄ saturated alkyl or hydroxyalkyl group, and A [-] is an anion; examples of such surfactants are available from Onyx Chemical Company under the Ammonyx^{®} 490 trademark;
(v) substituted imidazolinium salts having the formula: 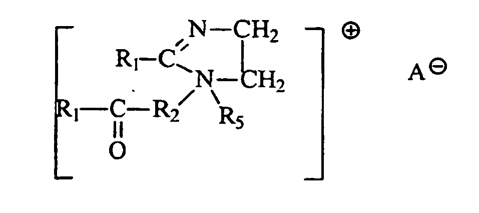 wherein each R₁ is an acyclic aliphatic C₁₅-C₂₁ hydrocarbon group, R₂ is a divalent alkylene group having 1 to 3 carbon atoms, and R₅ and A [-] are as defined above; examples are commercially available from Sherex Chemical Company under the Varisoft 475 and Varisoft 445 trademarks; and
(vi) substituted imidazolinium salts having the formula: 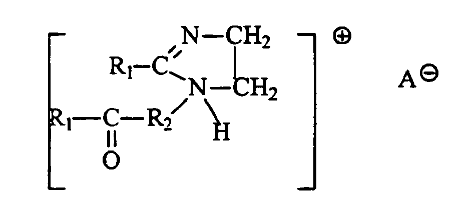
wherein R₁, R₂ and A - are as defined above; and mixtures thereof.

The more preferred cationic conventional surfactant is selected from the group consisting of an alkyltrimethylammonium salt, a dialkyldimethylammonium salt, an alkyldimethylbenzylammonium salt, an alkylpyridinium salt, an alkylisoquinolinium salt, benzethonium chloride, and an acylamino acid cationic surfactant.

### Anion A

In the cationic nitrogenous salts herein, the anion A [-] provides electrical neutrality. Most often, the anion used to provide electrical neutrality in these salts is a halide, such as chloride, bromide, or iodide. However, other anions can be used, such as methylsulfate, ethylsulfate, acetate, formate, sulfate, carbonate, and the like. Chloride and methylsulfate are preferred herein as anion A.

Cationic surfactants are commonly employed as fabric softeners in compositions added during the rinse cycle of clothes washing. Many different types of fabric conditioning agents have been used in rinse cycle added fabric conditioning compositions as disclosed by U.S. Patent No. 5,236,615, Trinh et al. and U.S. Patent No. 5,405,542, Trinh et al., both patents herein incorporated by reference in their entirety. The most favored type of agent has been the quaternary ammonium compounds. Many such quaternary ammonium compounds are disclosed for example, by U.S. Patent No. 5,510,042, Hartman et al. incorporated herein by reference in its entirety. These compounds may take the form of noncyclic quaternary ammonium salts having preferably two long chain alkyl groups attached to the nitrogen atoms. Additionally, imidazolinium salts have been used by themselves or in combination with other agents in the treatment of fabrics as disclosed by U.S. Patent No. 4,127,489, Pracht, et al.

U.S. Patent No. 2,874,074, Johnson discloses using imidazolinium salts to condition fabrics; and U.S. Patent No. 3,681,241, Rudy, and U.S. Patent No. 3,033,704, Sherrill et al. disclose fabric conditioning compositions containing mixtures of imidazolinium salts and other fabric conditioning agents.

### D. Amphoteric Surfactants

Amphoteric surfactants have a positive or negative charge or both on the hydrophilic part of the molecule in acidic or alkaline media.

Examples of the amphoteric surfactants which can be used herein include amino acid, betaine, sultaine, phosphobetaines, imidazolinium derivatives, soybean phospholipids, and yolk lecithin. Examples of suitable amphoteric surfactants include the alkali metal, alkaline earth metal, ammonium or substituted ammonium salts of alkyl amphocarboxy glycinates and alkyl amphocarboxypropionates, alkyl amphodipropionates, alkyl amphodiacetates, alkyl amphoglycinates and alkyl amphopropionates wherein alkyl represents an alkyl group having 6 to 20 carbon atoms. Other suitable amphoteric surfactants include alkyliminopropionates, alkyl iminodipropionates and alkyl amphopropylsulfonates having between 12 and 18 carbon atoms, alkylbetaines and amidopropylbetaines and alkylsultaines and alkylamidopropylhydroxy sultaines wherein alkyl represents an alkyl group having 6 to 20 carbon atoms are especially preferred.

Particularly useful amphoteric surfactants include both mono and dicarboxylates such as those of the formulae: 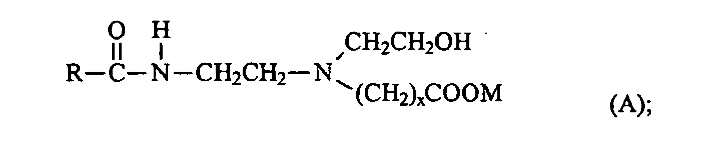 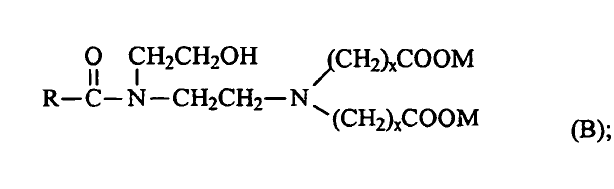 and 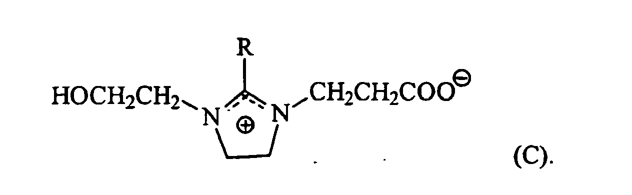 wherein R is an alkyl group of 6-20 carbon atoms, x is 1 or 2 and M is hydrogen or sodium. Mixtures of the above structures are particularly preferred.

Other formulae for the above amphoteric surfactants include the following:
Alkyl betaines 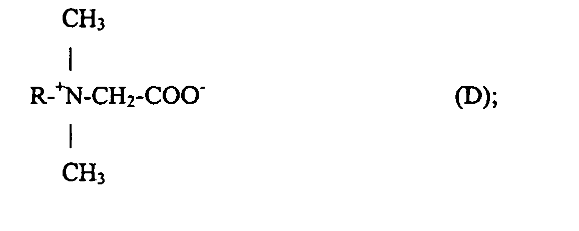
Amidopropyl betaines 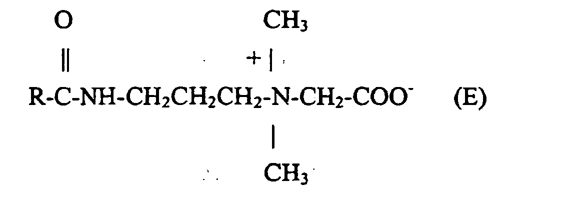
Alkyl sultaines 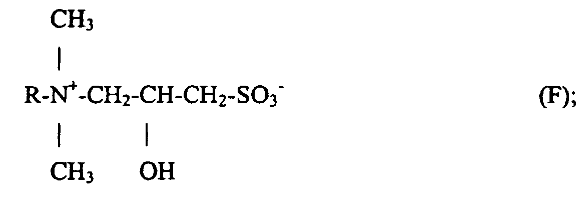 and
Alkyl amidopropylhydroxy sultaines 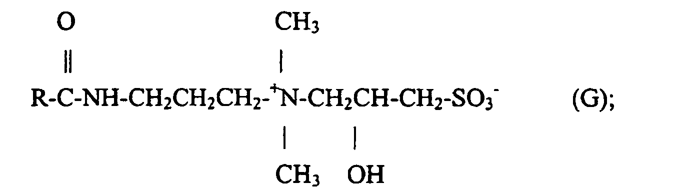
where R is an alkyl group of 6-20 carbon atoms and M is hydrogen or sodium.

Of the above amphoteric surfactants, particularly preferred are the alkali salts of alkyl amphocarboxyglycinates and alkyl amphocarboxypropionates, alkyl amphodipropionates, alkyl amphodiacetates, alkyl amphoglycinates, alkyl amphopropyl sulfonates and alkyl amphopropionates wherein alkyl represents an alkyl group having 6 to 20 carbon atoms. Even more preferred are compounds wherein the alkyl group is derived from coconut oil or is a lauryl group, for example, cocoamphodipropionate. Such cocoamphodipropionate surfactants are commercially sold under the trademarks Miranol C2M-SF CONC. and Miranol FBS by Rhone-Poulenc Inc.

Other commercially useful amphoteric surfactants are available from Rhone-Poulenc Inc. and include:

| |
|---|
| cocoamphoacetate (sold under the trademarks MIRANOL CM CONC. and MIRAPON FA), |
| cocoamphopropionate (sold under the trademarks MIRANOL CM-SF CONC. and MIRAPON FAS), |
| cocoamphodiacetate (sold under the trademarks MIRANOL C2M CONC. and MIRAPON FB), |
| lauroamphoacetate (sold under the trademarks MIRANOL HM CONC. and MIRAPON LA), |
| lauroamphodiacetate (sold under the trademarks MIRANOL H2M CONC. and MIRAPON LB), |
| lauroamphodipropionate (sold under the trademarks MIRANOL H2M SF CONC. AND MIRAPON LBS), |
| lauroamphodiacetate obtained from a mixture of lauric and myristic acids (sold under the trademark MIRANOL BM CONC.), and |
| cocoamphopropyl sulfonate (sold under the trademark MIRANOL CS CONC.) |

Somewhat less preferred are:

| |
|---|
| caproamphodiacetate (sold under the trademark MIRANOL S2M CONC.), |
| caproamphoacetate (sold under the trademark MIRANOL SM CONC.), |
| caproamphodipropionate (sold under the trademark MIRANOL S2M-SF CONC.), and |
| stearoamphoacetate (sold under the trademark MIRANOL DM). |

### E. Gemini Surfactants

Gemini surfactants form a special class of surfactant. These surfactants have the general formula:

A-G-A¹

and get their name because they comprise two surfactant moieties (A,A¹) joined by a spacer (G), wherein each surfactant moiety (A,A,¹) has a hydrophilic group and a hydrophobic group. Generally, the two surfactant moieties (A,A¹) are twins, but they can be different.

The gemini surfactants are advantageous because they have low critical micelle concentrations (cmc) and, thus, lower the cmc of solutions containing both a gemini surfactant and a conventional surfactant. Lower cmc causes better solubilization and increased detergency at lower surfactant use levels and unexpectedly enhances the deposition of the soil release polymers as claimed by this invention with demonstrated results to follow herein. Soil removal agents adhere to the fabric being laundered, much better than when mixed with only non-gemini, conventional surfactants.

Also, the gemini surfactants result in a low pC₂₀ value and low Krafft points. The pC₂₀ value is a measure of the surfactant concentration in the solution phase that will reduce the surface tension of the solvent by 20 dynes/cm. It is a measure of the tendency of the surfactant to adsorb at the surface of the solution. The Krafft point is the temperature at which the surfactant's solubility equals the cmc. Low Krafft points imply better solubility in water, and lead to greater latitude in making formulations.

A number of the gemini surfactants are reported in the literature, see for example, Okahara et al., J. Japan Oil Chem. Soc. 746 (Yukagaku) (1989); Zhu et al., 67 JAOCS 7,459 (July 1990); Zhu et al., 68 JAOCS 7,539 (1991); Menger et al., J. Am. Chemical Soc. 113, 1451 (1991); Masuyama et al., 41 J. Japan Chem. Soc. 4,301 (1992); Zhu et al., 69 JAOCS 1,30 (Jan. 1992); Zhu et al., 69 JAOCS 7,626 July 1992); Menger et al., 115 J. Am. Chem. Soc. 2, 10083 (1993); Rosen, Chemtech 30 (March 1993); and Gao et al., 71 JAOCS 7,771 (July 1994).

Also, gemini surfactants are disclosed by U.S. Patent Nos. 2,374,354, Kaplan; 2,524,218, Bersworth; 2,530,147 Bersworth (two hydrophobic tails and three hydrophilic heads); 3,244,724, Guttmann; 5,160,450, Okahara, et al.

The gemini surfactants may be anionic, nonionic, cationic or amphoteric. The hydrophilic and hydrophobic groups of each surfactant moiety (A,A¹) may be any of those known to be used in conventional surfactants having one hydrophilic group and one hydrophobic group.

For example, a typical nonionic gemini surfactant, e.g., a bis-polyoxyethylene alkyl ether, would contain two polyoxyethylene alkyl ether moieties.

Each moiety would contain a hydrophilic group, e.g., polyethylene oxide, and a hydrophobic group, e.g., an alkyl chain.

Gemini surfactants specifically useful in the present invention include gemini anionic or nonionic surfactants of the formulae: 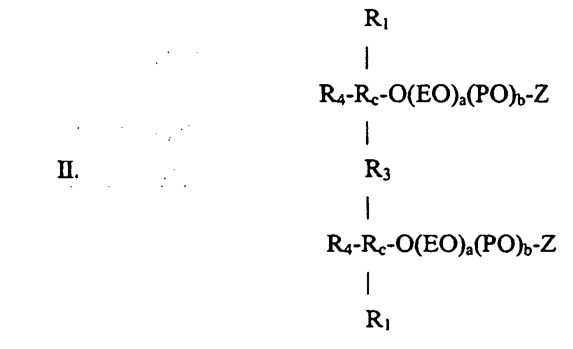 and 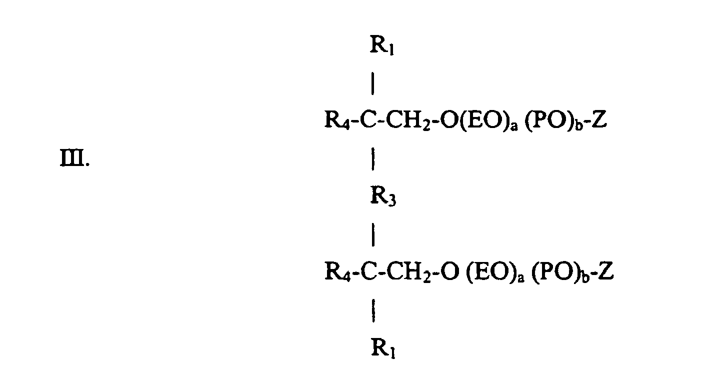 wherein R_{c} represents aryl, preferably phenyl. 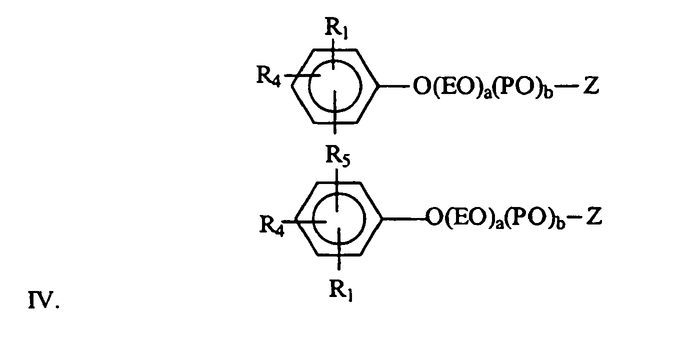 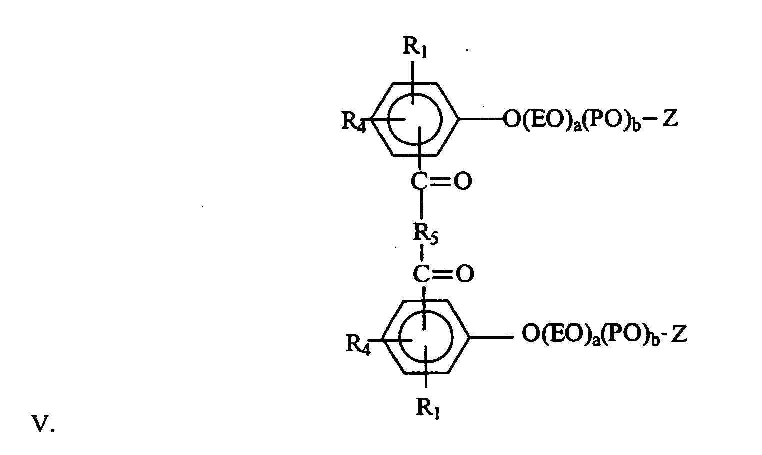 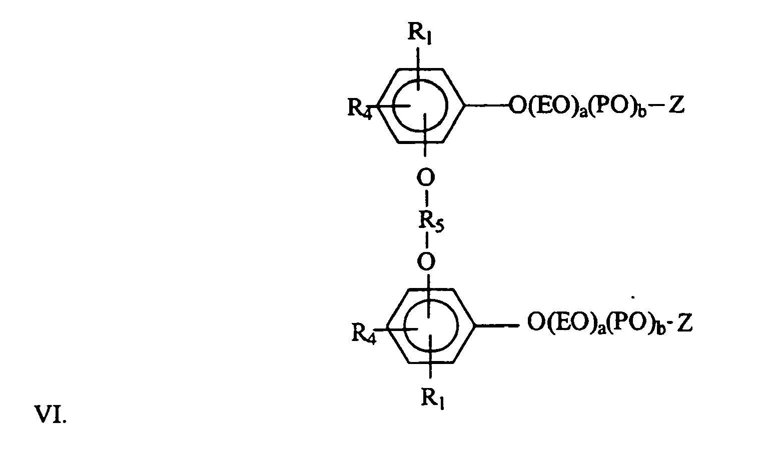 R₁, R₃, R₄, Y, Z, a and b are as defined above.

The primary hydroxyl group of these surfactants can be readily phosphated, sulfated or carboxylated by standard techniques.

The compounds included in Formula II can be prepared by a variety of synthetic routes. For instance, the compounds of Formula IV can be prepared by condensing a monoalkyl phenol with paraformaldehyde in the presence of an acid catalyst such as acetic acid. The compounds of Formula V can be synthesized by a Lewis acid catalyzed reaction of an alkylphenol with a dicarboxylic acid, e.g., terephthalic acid.

The compounds of Formula II are more fully described in copending application U.S.S.N. 60/009,075 filed 12/21/95.

A class of gemini surfactants that can be used in providing the improved emulsions which are operable at lower concentrations as disclosed in the present invention include a group of amphoteric, and cationic quaternary surfactants comprising compounds of the formula: 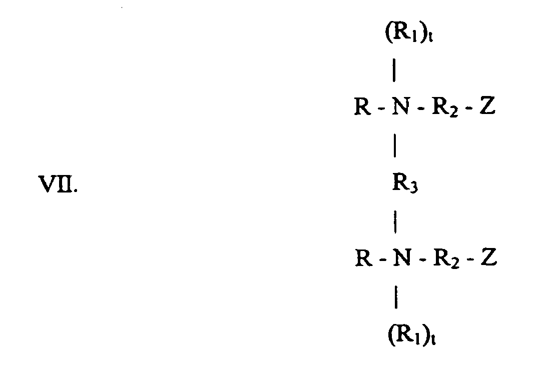 wherein R, t, and Z are as defined hereinbefore. R₁ is as defined before and includes the [-(EO)ₐ(PO)_{b}O- ]H moiety. R₂ is as defined before, however, D includes the following moieties: -N(R₆)-C(O)-R₅-CH₂O- and -N(R₆)-C(O)-R₅-N(R₆)-R₄-. When t is zero, the compounds are amphoteric and when t is 1, the compounds are cationic quaternary compounds. R₃ is selected from the group consisting of a bond, C₁-C₁₀ alkyl, and -R₈-D₁-R₈- wherein D₁, R₅, R₆, a, b, and R₈ are as defined above (except R₈ is not - OR₅O-).

Preferably, the compounds of Formula VII comprise: 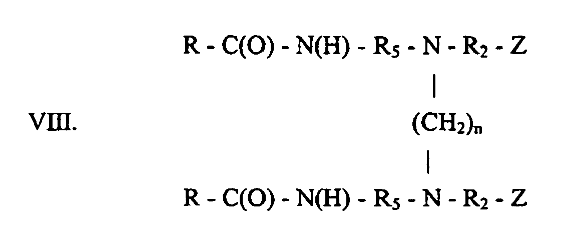 wherein R, R₂, R₅ and Z are as defined above and n equals a number from about 2 to about 10. More particularly, the compounds of Formula VII comprise: 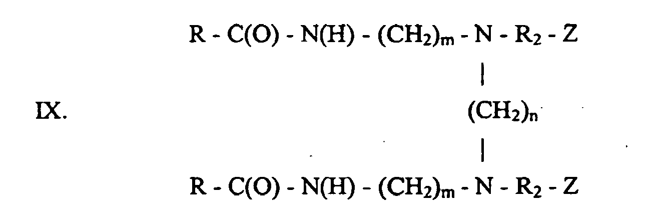 wherein R, R₂, R₅, Z, and n are as defined hereinbefore; and m independently equals a number between about 2 and about 10.

Representative compounds of Formula VII include:

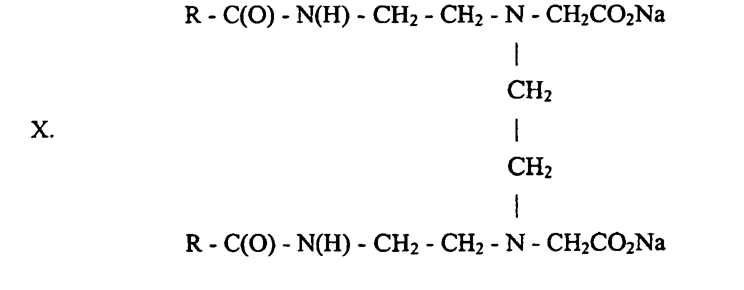

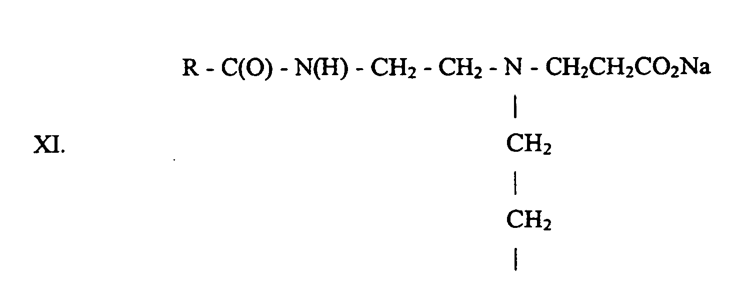

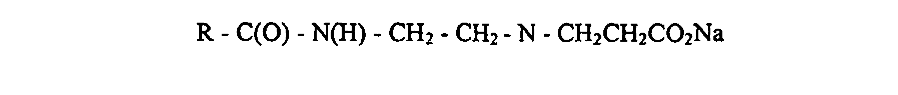

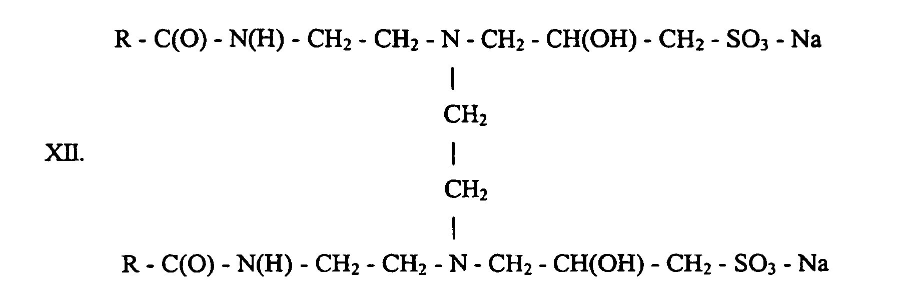

While the compounds of Formulae VII - XII can be prepared by a variety of synthetic routes, it has been found that they can be produced particularly effectively by a process which utilizes a polyamine reactant having at least four amino groups of which two are terminal primary amines such as triethylene tetramine. These processes are more fully set forth in copending application "Amphoteric Surfactants Having Multiple Hydrophobic and Hydrophilic Groups", U.S.S.N. 08/292,993 filed 08/19/94.

Another group of gemini surfactants which have been found to provide the low concentration emulsions of this invention are the cyclic cationic quaternary surfactants of the formula: 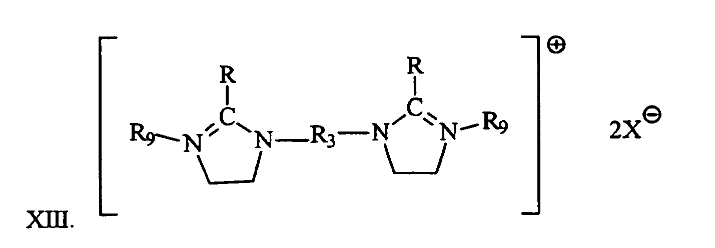 wherein R and R₃ are as identified hereinbefore in formula VII; R₉ is independently a C₁ - C₁₀ alkyl or alkylaryl; and X represents a counterion such as an anion illustrated by halogen (Cl, Br, and I), alkylsulfate such as methyl or ethylsulfate, alkylphosphate such as methylphosphate, and the like.

Preferably, the compounds used in the present invention comprise those of Formula XIII in which R₃ is a C₂ - C₄ alkyl, most preferably ethyl, R₉ is a lower alkyl of from 1 to about 4 carbon atoms, most preferably methyl; and X is halogen or methylsulfate.

The compounds of Formula XIII can be prepared by a variety of snythetic routes though it has been found that they can be produced particularly effectively by quaternizing a bisimidazoline prepared by a process disclosed and claimed in copending application "Amphoteric Surfactants having Multiple Hydrophobic and Hydrophilic Groups", U.S.S.N. 08/292,993 filed 08/19/94 wherein a polyamine reactant having at least four amino groups, of which two are terminal primary amine groups, is reacted with an acylating agent such as a carboxylic acid, ester, and the naturally occurring triglyceride esters thereof or acid chlorides thereof in an amount sufficient to provide at least about 1.8 fatty acid groups [R₁ C(O)-] per polyamine to provide the bisimidazoline.

Also included in the gemini surfactants useful in this invention are those of the formula: 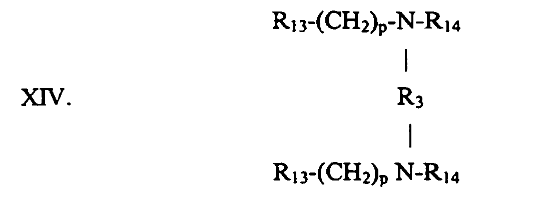 wherein R₁₃ is a sugar moiety, e.g., a monosaccharide, desaccharide, or polysaccharide such as glucose; or a polyhydroxy compound such as glycerol; p is independently 0 to 4; R₃ is as defined above in formula VII; and R₁₄ is a C₁-C₂₂ alkyl or - C(O)R₄ wherein R₄ is as described above.

Some of the compounds such as those described above are set forth more fully in U.S. Patent 5,534,197.

In the compounds used in the invention, many of the moieties can be derived from natural sources which will generally contain mixtures of different saturated and unsaturated carbon chain lengths. The natural sources can be illustrated by coconut oil or similar natural oil sources such as palm kernel oil, palm oil, osya oil, rapeseed oil, castor oil or animal fat sources such as herring oil and beef tallow. Generally, the fatty acids from natural sources in the form of the fatty acid or the triglyceride oil can be a mixture of alkyl radicals containing from about 5 to about 22 carbon atoms. Illustrative of the natural fatty acids are caprylic (C₈), capric (C₁₀), lauric (C₁₂), myristic (C₁₄), palmitic (C₁₆), stearic (C₁₈), oleic (C₁₈, monounsaturated), linoleic (C₁₈, diunsaturated), linolenic (C₁₈, triunsaturated), ricinoleic (C₁₈, monounsaturated) arachidic (C₂₀), gadolic (C₂₀, monounsaturated), behenic (C₂₂) and erucic (C₂₂). These fatty acids can be used per se, as concentrated cuts or as fractionations of natural source acids. The fatty acids with even numbered carbon chain lengths are given as illustrative though the odd numbered fatty acids can also be used. In addition, single carboxylic acids, e.g., lauric acid, or other cuts, as suited for the particular application, may be used.

Where desired, the surfactants used in the present invention can be oxyalkylated by reacting the product with an alkylene oxide according to known methods, preferably in the presence of an alkaline catalyst. The free hydroxyl groups of the alkoxylated derivative can then be sulfated, phosphated or acylated using normal methods such as sulfation with sulfamic acid or sulfur trioxide-pyridine complex, or acylation with an acylating agent such as a carboxylic acid, ester, and the naturally occurring triglyceride esters thereof.

For alkylation conditions and commonly used alkylating agents, see Amphoteric Surfactants Vol. 12, Ed. B. R. Bluestein and C. L. Hilton, Surfactant Science Series 1982, pg. 17 and references cited therein.

For sulfation and phosphation, see Surfactant Science Series, Vol. 7, Part 1, S.Shore & D. Berger, page 135, the disclosure of which is incorporated herein by reference. For phosphating review, see Surfactant Science Series, Vol. 7, Part II, E. Jungermann & H. Silbertman, page 495.

The surfactant compositions of the invention are extremely effective in aqueous solution at low concentrations as defined herein. The surfactants of the invention can be used in any amount needed for a particular application which can be easily determined by a skilled artisan without undue experimentation.

### IV. Auxiliary Detergent Ingredients

### A. Detergency Builders

Compositions of the present invention may include detergency builders selected from any of the conventional inorganic and organic water-soluble builder salts, including neutral or alkaline salts, as well as various water-insoluble and so-called "seeded" builders.

Builders are preferably selected from the various water-soluble, alkali metal, ammonium or substituted ammonium phosphates, polyphosphates, phosphonates, polyphosphonates, carbonates, silicates, borates, polyhydroxysulfonates, polyacetates, carboxylates, and polycarboxylates. Most preferred are the alkali metal, especially sodium, salts of the above.

Specific examples of inorganic phosphate builders are sodium and potassium tripolyphosphate, pyrophosphate, polymeric metaphate having a degree of polymerization of from about 6 to 21, and orthophosphate. Examples of polyphosphonate builders are the sodium and potassium salts of ethylene-1, 1-diphosphonic acid, the sodium and potassium salts of ethane 1-hydroxy-1, 1-diphosphonic acid and the sodium and potassium salts of ethane, 1,1,2-triphosphonic acid.

Examples of nonphosphorus, inorganic builders are sodium and potassium carbonate, bicarbonate, sesquicarbonate, tetraborate decahydrate, and silicate having a molar ratio of SIO₂ to alkali metal oxide of from about 0.5 to about 4.0, preferably from about 1.0 to about 2.4.

Water-soluble, nonphosphorus organic builders useful herein include the various alkali metal, ammonium and substituted ammonium polyacetates, carboxylates, polycarboxylates and polyhydroxysulfonates. Examples of polyacetate and polycarboxylate builders are the sodium, potassium, lithium, ammonium and substituted ammonium salts of ethylenediamine tetraacetic acid, nitrilotriacetic acid, oxydisuccinic acid, mellitic acid, benzene polycarboxylic acids, and citric acid.

Highly preferred polycarboxylate builders herein are set forth in U.S. Patent No. 3,308,067, Diehl, issued March 7, 1967. Such materials include the water-soluble salts of homo- and copolymers of aliphatic carboxylic acids such as maleic acid, itaconic acid, mesaconic acid, fumaric acid, aconitic acid, citraconic acid and methylenemalonic acid.

Other builders include the carboxylated carbohydrates of U.S. Patent No. 3,723,322, Diehl.

Other useful builders herein are sodium and potassium carboxymethyloxymalonate, carboxymethyloxysuccinate, cis-cyclohexanehexacarboxylate, cis-cyclopentanetetracarboxylate phloroglucinol trisulfonate, water-soluble polyacrylates (having molecular weights of from about 2,000 to about 200,000 for example), and the copolymers of maleic anhydride with vinyl methyl ether or ethylene.

Other suitable polycarboxylates for use herein are the polyacetal carboxylates described in U.S. Patent No. 4,144,226, issued March 13, 1979 to Crutchfield et al.; and U. S. Patent No. 4,246,495, issued March 27, 1979 to Crutchfield et al..

"Insoluble" builders include both seeded builders such as 3:1 weight mixtures of sodium carbonate and calcium carbonate; and 2.7:1 weight mixtures of sodium sesquicarbonate and calcium carbonate. Amphorus and crystalline alumino silicates such as hydrated sodium Zeolite A are commonly used in laundry detergent applications. They have a particle size diameter of 0.1 micron to about 10 microns depending on water content of these molecules. These are referred to as ion exchange materials. Crystalline alumino silicates are characterized by their calcium ion exchange capacity. Amphorus alumino silicates are usually characterized by their magnesium exchange capacity. They can be naturally occurring or synthetically derived.

A detailed listing of suitable detergency builders can be found in U.S. Patent No. 3,936,537.

### B. Miscellaneous Detergent Ingredients

Detergent composition components may also include hydrotropes, enzymes (e.g., proteases, amylases and cellulases), enzyme stabilizing agents, pH adjusting agents (monoethanolamine, sodium carbonate, etc.) halogen bleaches (e.g., sodium and potassium dichloroisocyanurates), peroxyacid bleaches (e.g., diperoxydodecane-1,12-dioic acid), inorganic percompound bleaches (e.g., sodium perborate), antioxidants as optional stabilizers, reductive agents, activators for percompound bleaches (e.g., tetraacetylethylenediamine and sodium nonanoyloxybenzene sulfonate), soil suspending agents (e.g., sodium carboxymethyl cellulose), soil anti-redisposition agents, corrosion inhibitors, perfumes and dyes, buffers, whitening agents, solvents (e.g., glycols and aliphatic alcohols) and optical brighteners. Any of other commonly used auxiliary additives such as inorganic salts and common salt, humectants, solubilizing agents, UV absorbers, softeners, chelating agents, static control agents and viscosity modifiers may be added to the detergent compositions of the invention.

### V. Composition Concentrations

The amount of the aminosilicone compound used in the laundy detergent compositions and methods of this invention will typically be sufficient to yield a concentration of aminosilicone compound in the washing medium of from about 0.001 to about 0.2 grams of aminosilicone compound per liter of washing medium, more typically from about 0.005 to about 0.1 g/L, and even more typically from about 0.01 to about 0.04 g/L.

In the compositions of the invention, the aminosilicone compound will typically be present in an amount of from about 0.005 to about 30 % by weight, more typically from about 1 to about 10 % by weight

The compositions can be in any form that is convenient for use as a detergent, e.g. bars, powders, flakes, pastes, or liquids which may be aqueous or non-aqueous and structured or unstructured. The detergent compositions can be prepared in any manner which is convenient and appropriate to the desired physical form so as co-agglomeration, spray drying, or dispersing in a liquid.

The total weight percentages of the conventional surfactants of the present invention, all weight percentages being based on the total active weight of the compositions of this invention consisting of aminosilicone compound, optional carrier, conventional surfactant(s), gemini surfactant(s), soil release agent(s), and (optionally) detergency builder(s) are about 10 to about 99.9 weight percent, typically about 15-75 weight percent.

The gemini surfactants are typically present, if employed, at a level of about 0.005 to about 50, typically from about 0.02-15.0, active weight percent of the composition.

The polymeric soil release agents, are typically present, if employed, at a level of from about 0.05 to about 40, typically from about 0.2-15 active weight percent.

The optional detergency builders are suitably present at a level of from about 0 to about 70 weight percent, typically from about 5 to about 50 weight percent.

### VI. Industrial Applicability

The compositions and methods of this invention can be used to clean various fabrics, e.g. wool, cotton, silk, polyesters, nylon, other synthetics, blends of multiple synthetics and or synthetic/natural fiber blends. The compositions and method are particularly useful with colored fabrics, i.e. those that have a visually perceptible hue. The compositions and methods are also particularly useful in connection with washing media that also contain a fragrance. The fragrance need not be pre-mixed or pre-reacted with the aminosilicone oil in any way nor must the fragrance as an active principle a hydroxy functional compound.

The fragrance substances that may be used in the context of the invention include natural and synthetic fragrances, perfumes, scents, and essences and any other substances and mixtures of liquids and/or powdery compositions which emit a fragrance. As the natural fragrances, there are those of animal origin, such as musk, civet, castreum, ambergris, or the like, and those of vegetable origin, such as lemon oil, rose oil, citronella oil, sandalwood oil, peppermint oil, cinnamon oil, or the like. As synthetic fragrances, there are mixed fragrances of alpha-pinene, limonene, geraniol, linalool, lavandulol, nerolidol, or the like.

### Anionic Surface-Active Agents:

Typical anionic surface active agents include the following:
- alkyl ester sulphonates of formula R-CH(SO₃M)-COOR', where R represents a C₈₋₂₀, preferably C₁₀-C₁₆, alkyl radical, R' a C₁-C₆, preferably C₁-C₃, alkyl radical and M an alkali metal (sodium, potassium or lithium) cation, a substituted or unsubstituted ammonium (methyl-, dimethyl-, trimethyl- or tetramethylammonium, dimethylpiperidinium, and the like) cation or a cation derived from an alkanolamine (monoethanolamine, diethanolamine, triethanolamine, and the like);
- alkyl sulphates of formula ROSO₃M, where R represents a C₅-C₂₄, preferably C₁₀-C₁₈, alkyl or hydroxyalkyl radical, M representing a hydrogen atom or a cation with the same definition as above, and their ethoxylated (EO) and/or propoxylated (PO) derivatives exhibiting an average of 0.5 to 30, preferably of 0.5 to 10, EO and/or PO units;
- alkylamide sulphates of formula RCONHR'OSO₃M, where R represents a C₂-C₂₂, preferably C₆-C₂₀, alkyl radical, R' a C₂-C₃ alkyl radical, M representing a hydrogen atom or a cation with the same definition as above, and their ethoxylated (EO) and/or propoxylated (PO) derivatives exhibiting an average of 0.5 to 60 EO and/or PO units;
- salts of C₈-C₂₄, preferably C₁₄-C₂₀, saturated or unsaturated fatty acids, C₉-C₂₀ alkylbenzenesulphonates, primary or secondary C₈-C₂₂ alkylsulphonates, alkylglycerol sulphonates, the sulphonated polycarboxylic acids described in GB-A-1,082,179, paraffin sulphonates, N-acyl-N-alkyltaurates, alkyl phosphates, isethionates, alkylsuccinamates, alkylsulphosuccinates, the monoesters or diesters of sulphosuccinates, N-acylsarcosinates, alkylglycoside sulphates or polyethoxycarboxylates the cation being an alkali metal (sodium, potassium or lithium), a substituted or unsubstituted ammonium residue (methyl-, dimethyl-, trimethyl- or tetramethylammonium, dimethylpiperidinium, and the like), or a residue derived from an alkanolamine (monoethanolamine, diethanolamine, triethanolamine, and the like);
- sophorolipids, such as those in acid or lactone form, derivatives of 17-hydroxyoctadecenic acid;and the like.

### Non-ionic Surface-Active Agents

Typical non-ionic surface active agents include the following:
- polyoxyalkylenated (polyoxyethylenated, polyoxypropylenated or polyoxybutylenated) alkylphenols, the alkyl substituent of which is C₆-C₁₂, containing from 5 to 25 oxyalkylene units; mention may be made, by way of example, of Triton X-45, X-114, X-100 or X-102, sold by Rohm & Haas Co., or Igepal NP2 to NP17 from Rhône-Poulenc;
- polyoxyalkylenated C₈-C₂₂ aliphatic alcohols containing from 1 to 25 oxyalkylene (oxyethylene or oxypropylene) units; mention may be made, by way of example, of Tergitol 15-S-9 or Tergitol 24-L-6 NMW, sold by Union Carbide Corp., Neodol 45-9, Neodol 23-65, Neodol 45-7 or Neodol 45-4, sold by Shell Chemical Co., Kyro EOB, sold by The Procter & Gamble Co., Synperonic A3 to A9 from ICI, or Rhodasurf IT, DB and B from Rhône-Poulenc;
- the products resulting from the condensation of ethylene oxide or of propylene oxide with propylene glycol or ethylene glycol, with a weight-average molecular mass of the order of 2000 to 10,000, such as the Pluronics sold by BASF;
- the products resulting from the condensation of ethylene oxide or of propylene oxide with ethylenediamine, such as the Tetronics sold by BASF;
- ethoxylated and/or propoxylated C₈-C₁₈ fatty acids containing from 5 to 25 oxyethylene and/or oxypropylene units;
- C₈-C₂₀ fatty acid amides containing from 5 to 30 oxyethylene units;
- ethoxylated amines containing from 5 to 30 oxyethylene units;
- alkoxylated amidoamines containing from 1 to 50, preferably from 1 to 25, very particularly from 2 to 20, oxyalkylene units (preferably oxyethylene units);
- amine oxides, such as (C₁₀-C₁₈ alkyl)dimethylamine oxides or (C₈-C₂₂ alkoxy)ethyldihydroxyethylamine oxides;
- alkoxylated terpene hydrocarbons, such as ethoxylated and/or propoxylated a- or b-pinenes, containing from 1 to 30 oxyethylene and/or oxypropylene units;
- the alkylpolyglycosides which can be obtained by condensation (for example by acid catalysis) of glucose with primary fatty alcohols (US-A-3,598,865, US-A-4,565,647, EP-A-132,043, EP-A-132,046, and the like) exhibiting a C₄-C₂₀, preferably C₈-C₁₈, alkyl group and a mean number of glucose units of the order of 0.5 to 3, preferably of the order of 1.1 to 1.8, per mole of alkylpolyglycoside (APG); mention may in particular be made of those exhibiting:
   symbol 45 \f "Symbol" \s 10- a C₈-C₁₄ alkyl group and, on average, 1.4 glucose units per mole
   symbol 45 \f "Symbol" \s 10- a C₁₂-C₁₄ alkyl group and, on average, 1.4 glucose units per mole
   symbol 45 \f "Symbol" \s 10- a C₈-C₁₄ alkyl group and, on average, 1.5 glucose units per mole
   symbol 45 \f "Symbol" \s 10- a C₈-C₁₀ alkyl group and, on average, 1.6 glucose units per mole sold respectively under the names Glucopon 600 EC^{®}, Glucopon 600 CSUP^{®}, Glucopon 650 EC^{®} and Glucopon 225 CSUP^{®} by Henkel.

Mention may particularly be made, among soluble inorganic builders (B), of:
- amorphous or crystalline alkali metal silicates of formula xSiO₂symbol 183 \f "Symbol" \s 10·M₂Osymbol 183 \f "Symbol" \s 10·yH₂O, with 1 symbol 163 \f "Symbol" \s 10£ x symbol 163 \f "Symbol" \s 10£ 3.5 and 0 symbol 163 \f "Symbol" \s 10£ y/(x+1+y) symbol 163 \f "Symbol" \s 10£ 0.5, where M is an alkali metal and very particularly sodium, including lamellar alkali metal silicates, such as those described in US-A-4,664,839;
- alkaline carbonates (bicarbonates, sesquicarbonates);
- cogranules of hydrated alkali metal silicates and of alkali metal carbonates (sodium or potassium) which are rich in silicon atoms in the Q2 or Q3 form, described in EP-A-488,868; and
- tetraborates or borate precursors.

Mention may particularly be made, among soluble organic builders (B), of:
- water-soluble polyphosphonates (ethane-1-hydroxy-1,1-diphosphonates, salts of methylenediphosphonates, and the like);
- water-soluble salts of carboxyl polymers or copolymers, such as the water-soluble salts of polycarboxylic acids with a molecular mass of the order of 2000 to 100,000 obtained by polymerization or copolymerization of ethylenically unsaturated carboxylic acids, such as acrylic acid, maleic acid or anhydride, fumaric acid, itaconic acid, mesaconic acid, citraconic acid or methylenemalonic acid, and very particularly polyacrylates with a molecular mass of the order of 2000 to 10,000 (US-A-3,308,067) or copolymers of acrylic acid and of maleic anhydride with a molecular mass of the order of 5000 to 75,000 (EP-A-066,915);
- polycarboxylate ethers (oxydisuccinic acid and its salts, tartrate monosuccinic acid and its salts, tartrate disuccinic acid and its salts);
- hydroxypolycarboxylate ethers;
- citric acid and its salts, mellitic acid, succinic acid and their salts;
- salts of polyacetic acids (ethylenediaminetetraacetates, nitrilotriacetates, N-(2-hydroxyethyl)nitrilodiacetates);
- (C₅-C₂₀ alkyl)succinic acids and their salts (2-dodecenylsuccinates, laurylsuccinates, and the like);
- polyacetal carboxylic esters;
- polyaspartic acid, polyglutamic acid and their salts;
- polyimides derived from the polycondensation of aspartic acid and/or of glutamic acid;
- polycarboxymethylated derivatives of glutamic acid (such as N,N-bis(carboxymethyl)glutamic acid and its salts, in particular the sodium salt) or of other amino acids; and
- aminophosphonates, such as nitrilotris(methylenephosphonate)s.

For a good implementation of the invention, the said aminosilicone (AS) can be chosen from the aminopolyorganosiloxanes (APS) comprising siloxane units of general formulae:

R¹ₐB_{b}SiO_{(4-a-b)/2} (I),

where a+b = 3, with a = 0, 1, 2 or 3 and b = 0, 1, 2 or 3

R¹_{c}A_{d}SiO_{(4-c-d)/2} (II),

where c+d = 2, with c = 0 or 1 and d = 1 or 2

R¹₂SiO_{2/2} (III)

and optionally

R¹ₑA_{f}SiO_{(4-e-f)/2} (IV),

where e+f = 0 or 1, with e = 0 or 1 and f = 0 or 1
in which formulae,
symbol 45 \f "Symbol" \s 10- the R¹ symbols, which are identical or different, represent a saturated or unsaturated, linear or branched, aliphatic radical containing from 1 to 10 carbon atoms or a phenyl radical, optionally substituted by fluoro or cyano groups;
symbol 45 \f "Symbol" \s 10- the A symbols, which are identical or different, represent a primary, secondary, tertiary or quaternized amino group bonded to the silicon via an SiC bond;
symbol 45 \f "Symbol" \s 10- the B symbols, which are identical or different, represent
symbol 45 \f "Symbol" \s 10- an OH functional group;
symbol 45 \f "Symbol" \s 10- an OR functional group, where R represents an alkyl group containing from 1 to 12 carbon atoms, preferably from 3 to 6 carbon atoms, very particularly 4 carbon atoms;
symbol 45 \f "Symbol" \s 10- an OCOR' functional group, where R' represents an alkyl group containing from 1 to 12 carbon atoms, preferably 1 carbon atom; or
symbol 45 \f "Symbol" \s 10- the A symbol.

The aminopolyorganosiloxanes (APS) preferably comprise units of formula (I), (II), (III) and optionally (IV), where
symbol 45 \f "Symbol" \s 10- in the units of formula (I), a = 1, 2 or 3 and b = 0 or 1 and
symbol 45 \f "Symbol" \s 10- in the units of formula (II), c = 1 and d = 1.

The A symbol is preferably an amino group of formula

-R²-N(R³)(R⁴)

where
symbol 45 \f "Symbol" \s 10- the R² symbol represents an alkylene group containing from 2 to 6 carbon atoms, which group is optionally substituted or interrupted by one or more nitrogen or oxygen atoms,
symbol 45 \f "Symbol" \s 10- the R³ and R⁴ symbols, which are identical or different, represent
symbol 45 \f "Symbol" \s 10- H,
symbol 45 \f "Symbol" \s 10- an alkyl or hydroxyalkyl group containing from 1 to 12 carbon atoms, preferably from 1 to 6 carbon atoms,
symbol 45 \f "Symbol" \s 10- an aminoalkyl group, preferably a primary aminoalkyl group, the alkyl group of which contains from 1 to 12 carbon atoms, preferably from 1 to 6 carbon atoms, which group is optionally substituted and/or interrupted by at least one nitrogen and/or oxygen atom, the said amino group optionally being quaternized, for example by a hydrohalic acid or an alkyl or aryl halide.

Mention may particularly be made, as example of A symbol, of those of formulae:

| | |
|---|---|
| -(CH₂)₃NH₂; | -(CH₂)₃NH₃⁺ X⁻; |
| -(CH₂)₃N(CH₃)₂; | -(CH₂)₃N⁺(CH₃)₂(C₁₈H₃₇) X ⁻; |
| -(CH₂)₃NHCH₂CH₂NH₂; | -(CH₂)₃N(CH₂CH₂OH)₂; and |
| -(CH₂)₃N(CH₂CH₂NH₂)₂. | |

Among these, the preferred formulae are:

-(CH₂)₃NH₂ -(CH₂)₃NHCH₂CH₂NH₂ and -(CH₂)₃N(CH₂CH₂NH₂)₂.

The R¹ symbol preferably represent methyl, ethyl, vinyl, phenyl, trifluoropropyl or cyanopropyl groups. It very particularly represents the methyl group (at least predominantly).

The B symbol preferably represents an OR group where R contains from 1 to 6 carbon atoms, very particularly 4 carbon atoms, or the A symbol. The B symbol is very preferably a methyl or butoxy group.

The aminosilicone is preferably at least substantially linear. It is very preferably linear, that is to say does not contain units of formula (IV). It can exhibit a number-average molecular mass of the order of 2000 to 50,000, preferably of the order of 3000 to 30,000.

For a good implementation of the invention, the aminosilicones (AS) or the aminopolyorganosiloxanes (APS) can exhibit in their chain, per total of 100 silicon atoms, from 0.1 to 50, preferably from 0.3 to 10, very particularly from 0.5 to 5, aminofunctionalized silicon atoms.

Insoluble inorganic builders can additionally be present but in a limited amount, in order not to exceed the level of less than 20% of insoluble inorganic material defined above.

Mention may be made, among these adjuvants, of crystalline or amorphous aluminosilicates of alkali metals (sodium or potassium) or of ammonium, such as zeolites A, P, X, and the like.

The detergent compositions can additionally comprise standard additives for powder detergent compositions. Typical such additional ingredients are as follows.

### Additional Soil Release Agents

Additional soil release agents may be provided in amounts of the order of 0.01-10%, preferably of the order of 0.1 to 5% and very particularly of the order of 0.2-3% by weight. Typical such agents include any of the following:
- cellulose derivatives, such as cellulose hydroxyethers, methylcellulose, ethylcellulose, hydroxypropyl methylcellulose or hydroxybutyl methylcellulose;
- poly(vinyl ester)s grafted onto polyalkylene stems, such as poly(vinyl acetate)s grafted onto polyoxyethylene stems (EP-A-219,048);
- poly(vinyl alcohol)s;
- polyester copolymers based on ethylene terephthalate and/or propylene terephthalate and polyoxyethylene terephthalate units, with an ethylene terephthalate and/or propylene terephthalate (number of units)/polyoxyethylene terephthalate (number of units) molar ratio of the order of 1/10 to 10/1, preferably of the order of 1/1 to 9/1, the polyoxyethylene terephthalates exhibiting polyoxyethylene units having a molecular weight of the order of 300 to 5000, preferably of the order of 600 to 5000 (US-A-3,959,230, US-A-3,893,929, US-A-4,116,896, US-A-4,702,857 and US-A-4,770,666);
- sulphonated polyester oligomers, obtained by sulphonation of an oligomer derived from ethoxylated allyl alcohol, from dimethyl terephthalate and from 1,2-propanediol, exhibiting from 1 to 4 sulphonate groups (US-A-4,968,451);
- polyester copolymers based on propylene terephthalate and polyoxyethylene terephthalate units which are optionally sulphonated or carboxylated and terminated by ethyl or methyl units (US-A-4,711,730) or optionally sulphonated polyester oligomers terminated by alkylpolyethoxy groups (US-A-4,702,857) or anionic sulphopolyethoxy (US-A-4,721,580) or sulphoaroyl (US-A-4,877,896) groups;
- sulphonated polyesters with a molecular mass of less than 20,000, obtained from a diester of terephthalic acid, isophthalic acid, a diester of sulphoisophthalic acid and a diol, in particular ethylene glycol (WO 95/32997);
- polyesterpolyurethanes obtained by reaction of a polyester with a number-average molecular mass of 300 to 4000, obtained from adipic acid and/or terephthalic acid and/or sulphoisophthalic acid and a diol, with a prepolymer containing end isocyanate groups obtained from a poly(ethylene glycol) with a molecular mass of 600-4000 and a diisocyanate (FR-A-2,334,698).

### Anti-Redeposition Agents

Anti-redeposition agents may be provided in amounts of approximately 0.01-10% by weight for a powder detergent composition and of approximately 0.01-5% by weight for a liquid detergent composition. Typical such agents include any of the following:
- ethoxylated monoamines or polyamines or ethoxylated amine polymers (US-A-4,597,898, EP-A-011,984);
- carboxymethylcellulose;
- sulphonated polyester oligomers obtained by condensation of isophthalic acid, dimethyl sulphosuccinate and diethylene glycol (FR-A-2,236,926); and
- polyvinylpyrrolidones.

### Bleaching Agents

Bleaching agents may be provided in an amount of approximately 0.1-20%, preferably 1-10%, of the weight of the said powder detergent composition. Typical such agents include any of the following:
- perborates, such as sodium perborate monohydrate or tetrahydrate;
- peroxygenated compounds, such as sodium carbonate peroxohydrate, pyrophosphate peroxohydrate, urea hydrogen peroxide, sodium peroxide or sodium persulphate;
- percarboxylic acids and their salts (known as "percarbonates"), such as magnesium monoperoxyphthalate hexahydrate, magnesium meta-chloroperbenzoate, 4-nonylamino-4-oxoperoxybutyric acid, 6-nonylamino-6-oxoperoxycaproic acid, diperoxydodecanedioic acid, peroxysuccinic acid nonylamide or decyldiperoxysuccinic acid,
preferably in combination with a bleaching activator generating, in situ in the washing liquor, a peroxycarboxylic acid; mention may be made, among these activators, of tetraacetylethylenediamine, tetraacetylmethylenediamine, tetraacetylglycoluril, sodium p-acetoxybenzenesulphonate, pentacetylglucose, octaacetyllactose, and the like.

### Fluorescence Agents

Fluorescence agetns may be provided in an amount of approximately 0.05-1.2% by weight. Typical such agents include any derivatives of stilbene, pyrazoline, coumarin, fumaric acid, cinnamic acid, azoles, methinecyanines, thiophenes, and the like;

### Foam-Suppressant Agents

Foam-suppressant agents may be provided in amounts which can range up to 5% by weight. Typical such agents include any of the following:
- C₁₀-C₂₄ fatty monocarboxylic acids or their alkali metal, ammonium or alkanolamine salts or fatty acid triglycerides;
- saturated or unsaturated, aliphatic, alicyclic, aromatic or heterocyclic hydrocarbons, such as paraffins or waxes;
- N-alkylaminotriazines;
- monostearyl phosphates or monostearyl alcohol phosphates; and
- polyorganosiloxane oils or resins, optionally combined with silica particles;

### Softeners

Softeners may be provided in amounts of approximately 0.5-10% by weight. Typical such agents are clays (smectites, such as montmorillonite, hectorite or saponite);

### Enzymes

Enzymes may be provided in an amount which can range up to 5 mg by weight, preferably of the order of 0.05-3 mg, of active enzyme/g of detergent composition. Typical enzymes are proteases, amylases, lipases, cellulases or peroxydases (US-A-3,553,139, US-A-4,101,457, US-A-4,507,219 and US-A-4,261,868).

### Other Additives

Typical other additives may be any of the following:
- alcohols (methanol, ethanol, propanol, isopropanol, propanediol, ethylene glycol or glycerol);
- buffer agents or fillers, such as sodium sulphate or alkaline earth metal carbonates or bicarbonates; and
- pigments,
the amounts of optional insoluble inorganic additives having to be sufficiently limited in order not to exceed the level of less than 20% of insoluble inorganic materials defined above.

### AGROCHEMICAL FOAMS

The suds stabilizers (foam enhancers) of the present invention may also be employed in foams for delivering agrochemicals, for example, herbicides, pesticides, fungicides, or detoxifying agents. Examples of foams for agrochemicals are disclosed by U.S. Patent Nos. 3,960,763 to Lambou, et al; 5,346,699 to Tiernan, et al; 5,549,869 to Iwakawa; 5,686,024 to Dahanayake et al; and 5,735,955 to Monaghan et al.

### OIL FIELD FOAMS

The suds stabilizers (foam enhancers) of the present invention may be employed in foams for use in subterranean formations, such as oil wells. For example, foams are employed in drilling fluids, as well as in enhanced oil recovery with steam or carbon dioxide. Examples of foams for use in oil wells are disclosed by U.S. Patent Nos. 5,821,203 to Williamson; 5,706,895 to Sydansk; 5,714,001 to Savoly, et al; 5,614,473 to Dino, et al; 5,042,583 to D'Souza, et al; and 5,027,898 to Naae.

### FIRE-FIGHTING FOAMS

The suds stabilizers (foam enhancers) of the present invention may be employed in foams for use in fire-fighting. Typical fire-fighting foams are disclosed in U.S. Patent Nos. 5,882,541 to Achtmann; 5,658,961 to Cox, Sr.; 5,496,475 to Jho, et al; 5,218,021 to Clark et al; and 4,713,182 to Hiltz, et al.

The foam enhancer is also useful in a foam dephilatory. An example of a foam dephilatory is disclosed in U.S. Patent No. 4,734,099 to Cyprien.

### COAGULANTS FOR TREATING PAPER MAKING WATER

The suds stabilizers (foam enhancers) of the present invnetion also have another use unrelated to foaming. They are retention aids for retention of titanium dioxide (TiO₂) used for whitening paper during paper making. These retention aids act as coagulants to cause particles of titanium dioxide to coagulate. The coagulated particles deposit on the paper. As a result, water will drain faster from paper upon which coagulated titanium dioxide is deposited. The use of titanium dioxide for whitening paper is disclosed by U.S. Patent Nos. 5,665,466 to Guez et al; 5,705,033 to Gerard, et al; and 5,169,441 to Lauzon.

### HARD SURFACE CLEANERS

The suds stabilizers (foam enhancers) of the present invention may be employed with foam hard surface cleaners as are typically employed with bathroom tile surfaces. _ Examples of such foam cleaners are disclosed by U.S. Patent Nos. 5,612,308 to Woo, et al; and 5,232,632 to Woo, et al.

The present invention is further illustrated by the following examples of zwitterionic polymeric suds stabilizers (enhancing agents), provided that no observations or other statements made therein should be construed to limit the invention, unless otherwise expressly indicated in the claims appended hereto. All amounts, parts, percentages, and ratios expressed in this specification, including the claims are by weight unless otherwise apparent in context.

### EXAMPLE 1

### Preparation of Poly(DMAM-co-DMA) (3:1) Copolymer

2-(Dimethylamino)ethyl methacrylate (20.00 g, 127.2 mmol), *N,N-*dimethylacrylamide (4.20 g 42.4 mmol), 2,2'-azobisisobutyronitrile (0.14 g, 0.85 mmol), 1,4-dioxane (75 ml) and 2-propanol (15 ml) are placed into a 250 ml three-necked round-bottomed flask, fitted with a heating mantle, magnetic stirrer, internal thermometer and argon inlet. The mixture is subjected to three freeze-pump-thaw cycles to remove dissolved oxygen. The mixture is heated for 18 hours with stirring at 65°C. TLC (diethyl ether) indicates consumption of monomer. The mixture is concentrated under vacuum by rotary evaporation to remove the solvent. Water is added to make a 10% solution and the mixture is dialyzed (3500 MWCO) against water, lyophilized and then pulverized in a blender to yield a white powder. NMR is consistent with the desired compound.

### EXAMPLE 2

### Preparation of Poly(DMAM) Polymer

2-(Dimethylamino)ethyl methacrylate (3000.00 g, 19.082 mol), 2,2'-azobisisobutyronitrile (15.67 g, 0.095 mol), 1,4-dioxane (10.5 L) and 2-propanol (2.1 L) are placed into a 22 L three-necked round-bottomed flask, fitted with a reflux condenser, heating mantle, mechanical stirrer, internal thermometer and argon inlet. The mixture is sparged with argon for 45 minutes with vigorous stirring to remove dissolved oxygen. The mixture is heated for 18 hours with stirring at 65°C. TLC (diethyl ether) indicates consumption of monomer. The mixture is concentrated under vacuum by rotary evaporation to remove the bulk of solvent. A 50:50 mixture of water:t-butanol is added to dissolve the product and the t-butanol is removed under vacuum by rotary evaporation. Water is added to make a 10% solution and the mixture is lyophilized and then pulverized in a blender to yield a white powder. NMR is consistent with the desired compound.

### EXAMPLE 3

### Preparation of Poly(DMAM-co-AA) (2:1) Copolymer

2-(Dimethylamino)ethyl methacrylate (90.00 g, 572.4 mmol), acrylic acid (20.63 g, 286.2 mmol), 2,2'-azobisisobutyronitrile (0.70 g, 4.3 mmol), 1,4-dioxane (345 ml) and 2-propanol (86 ml) are placed into a 1000 ml three-necked round-bottomed flask, fitted with a heating mantle, magnetic stirrer, internal thermometer and argon inlet. The mixture is sparged with nitrogen for 30 minutes to remove dissolved oxygen. The mixture is heated for 18 hours with stirring at 65°C. TLC (diethyl ether) indicates consumption of monomer. The mixture is concentrated under vacuum by rotary evaporation to remove the solvent. Water is added to make a 10% solution and the mixture is lyophilized and then pulverized in a blender to yield an off-white-peach powder. NMR is consistent with the desired compound.

### EXAMPLE 4

### Preparation of Poly(DMAM-co-MAA) (2:1) Copolymer

2-(Dimethylamino)ethyl methacrylate (98.00 g, 623.3 mmol), methacrylic acid (26.83 g, 311.7 mmol), 2,2'-azobisisobutyronitrile (0.77 g, 4.7 mmol), 1,4-dioxane (435 ml) and 2-propanol (108 ml) are placed into a 1000 ml three-necked round-bottomed flask, fitted with a heating mantle, magnetic stirrer, internal thermometer and argon inlet. The mixture is sparged with nitrogen for 30 minutes to remove dissolved oxygen. The mixture is heated for 18 hours with stirring at 65°C. TLC (diethyl ether) indicates consumption of monomer. The mixture is concentrated under vacuum by rotary evaporation to remove the solvent. Water is added to make a 10% solution and the mixture is lyophilized and then pulverized in a blender to yield a white powder. NMR is consistent with the desired compound.

### EXAMPLE 5

### Poly(DMAM-co-MAA-co-AA) (4:1:1) Terpolymer

Poly(DMAM-co-MAA-co-AA) (4:1:1). The procedure of Example 4 is repeated with the substitution of an equimolar amount of methacrylic acid with a 1:1 mixture of methacrylic acid and acrylic acid.

### EXAMPLE 6

### Poly(DMAM-co-MAA-co-DMA) (4:1:1) Terpolymer

Poly(DMAM-co-MAA-co-AA) (4:1:1). The procedure of Example 4 is repeated with the substitution of an equimolar amount of methacrylic acid with a 1:1 mixture of methacrylic acid and N,N-dimethylacrylamide.

### EXAMPLE 7

### Preparation of Poly(DMAM) Polymer

Polyacrylic acid is esterified with 2-(dimethylamino)ethanol using well known methods such as one described in Org. Syn. Coll. Vol. 3 610 (1955).

### EXAMPLE 8

### Preparation of Poly(DMA-co-DMAM) (3:1) Copolymer

The procedure of Example 1 is repeated except that 2-(dimethylamino)ethyl methacrylate (6.67 g, 42.4 mmol), *N,N*-dimethylacrylamide (12.6 g 127.2 mmol) is used instead, to give a ratio in the polymer of DMA to DMAM of 3:1.

### EXAMPLE 9

### Preparation of zwitterionic polymer

### Reaction of (1-octene/maleic anhydride) copolymer with 1 equivalent of DMAPA

Poly(maleic anhydride-alt-1-octene) (15.00 g) and tetrahydrofuran (200 ml, anhydrous) are placed into a 250 ml three-necked round-bottom flask, fitted with a heating mantle, magnetic stirrer, dropping funnel, internal thermometer and argon inlet. 3-Dimethylaminopropylamine (7.65 g, 74.87 mmol) is added dropwise over 15 minutes, with an exotherm to 30°C and heavy precipitation. The mixture is stirred for 4 hours at 55°C. The mixture is poured into 3:1 ethyl ether:hexanes to precipitate the product which is dried under vacuum to yield a white powder. NMR is consistent with the desired compound.

### EXAMPLE 10

### Reaction of (1-hexene/maleic anhydride) copolymer with 1 equivalent of DMAPA

Poly(maleic anhydride-alt-1-hexene) (15.00 g) and pyridine (150 ml, anhydrous) are placed into a 250 ml three-necked round-bottom flask, fitted with a heating mantle, magnetic stirrer, dropping funnel, internal thermometer and argon inlet. There is a slight exotherm and the mixture is dark. 3-Dimethylaminopropylamine (9.25 g, 90.53 mmol) is added dropwise over 15 minutes, with an exotherm to 45°C. The mixture is stirred for 4 hours at 80°C. The mixture is concentrated by rotary evaporation, dissolved into water and lyophilized to yield a yellow powder. NMR is consistent with the desired compound.

### FORMULATION EXAMPLES

In the following examples, the suds boosting polymer can be any of the suds boosting polymers described herein, preferably one of the suds boosting polymers according to Examples 1-7.

### Cleaning Compositions for Hard Surfaces, and Fabrics Examples

### 1. Hard surface cleaning compositions

As used herein "hard surface cleaning composition" refers to liquid and granular detergent compositions for cleaning hard surfaces such as floors, walls, bathroom tile, and the like. Hard surface cleaning compositions of the present invention comprise an effective amount of one or more protease enzymes, preferably from about 0.0001 % to about 10%, more preferably from about 0.001% to about 5%, more preferably still from about 0.001 % to about 1% by weight of active protease enzyme of the composition. In addition to comprising one or more protease enzymes, such hard surface cleaning compositions typically comprise a surfactant and a water-soluble sequestering builder. In certain specialized products such as spray window cleaners, however, the surfactants are sometimes not used since they may produce a filmy/streaky residue on the glass surface. (See U.S. Patent No. 5,679,630 Examples).

The surfactant component, when present, may comprise as little as 0.1 % of the compositions herein, but typically the compositions will contain from about 0.25% to about 10%, more preferably from about 1% to about 5% of surfactant.

Typically the compositions will contain from about 0.5% to about 50% of a detergency builder, preferably from about 1% to about 10%. Preferably the pH should be in the range of about 8 to 12. Conventional pH adjustment agents such as sodium hydroxide, sodium carbonate or hydrochloric acid can be used if adjustment is necessary.

Solvents may be included in the compositions. Useful solvents include, but are not limited to, glycol ethers such as diethyleneglycol monohexyl ether, diethyleneglycol monobutyl ether, ethyleneglycol monobutyl ether, ethyleneglycol monohexyl ether, propyleneglycol monobutyl ether, dipropyleneglycol monobutyl ether, and diols such as 2,2,4-trimethyl-1,3-pentanediol and 2-ethyl-1,3-hexanediol. When used, such solvents are typically present at levels of from about 0.5% to about 15%, preferably from about 3% to about 11%.

Additionally, highly volatile solvents such as isopropanol or ethanol can be used in the present compositions to facilitate faster evaporation of the composition from surfaces when the surface is not rinsed after "full strength" application of the composition to the surface. When used, volatile solvents are typically present at levels of from about 2% to about 12% in the compositions.

The hard surface cleaning composition embodiment of the present invention is illustrated by the following nonlimiting examples.

### Examples 1-7

### Liquid Hard Surface Cleaning Compositions

| | Example No. | | | | | | |
|---|---|---|---|---|---|---|---|
| Component | 1 | 2 | 3 | 4 | 5 | 6 | 7 |
| Protease | 0.05 | 0.05 | 0.20 | 0.02 | 0.03 | 0.10 | 0.03 |
| Suds boosting | | | | | | | |
| polymer | 1.0 | 1.2 | 0.7 | 0.9 | 1.5 | 2.8 | 2.4 |
| Chelant** | - | - | - | 2.90 | 2.90 | - | - |
| Citrate | - | - | - | - | - | 2.90 | 2.90 |
| LAS | - | 1.95 | - | 1.95 | - | 1.95 | - |
| AS | 2.00 - | | 2.20 | - | 2.20 | - | 2.20 |
| AES | 2.00 | - | 2.20 | - | 2.20 | - | 2.20 |
| Amine Oxide | 0.40 | - | 0.50 | - | 0.50 | - | 0.50 |
| Hydrotrope | - | 1.30 | - | 1.30 | - | 1.30 | - |
| Solvent*** | - | 6.30 | 6.30 | 6.30 | 6.30 | 6.30 | 6.30 |
| Water and Minors | balance to 100% | | | | | | |

| | | | | | | | |
|---|---|---|---|---|---|---|---|
| **Na₄ ethylenediamine diacetic acid ***Diethyleneglycol monohexyl ether ****All formulas adjusted to pH 7 | | | | | | | |

### Examples 8-13

### Spray Compositions for Cleaning Hard Surfaces and Removing Household Mildew

| | **Example No.** | | | | | |
|---|---|---|---|---|---|---|
| Component | 8 | 9 | 10 | 11 | 12 | 13 |
| Protease | 0.20 | 0.05 | 0.10 | 0.30 | 0.20 | 0.30 |
| Suds boosting polymer | 0.7 | 0.9 | 1.1 | 3.0 | 2.1 | 1.3. |
| C8AS | 2.00 | 2.00 | 2.00 | 2.00 | 2.00 | 2.00 |
| C12AS | 4.00 | 4.00 | 4.00 | 4.00 | 4.00 | 4.00 |
| Base | 0.80 | 0.80 | 0.80 | 0.80 | 0.80 | 0.80 |
| Silicate | 0.04 | 0.04 | 0.04 | 0.04 | 0.04 | 0.04 |
| Perfume | 0.35 | 0.35 | 0.35 | 0.35 | 0.35 | 0.35 |
| Water and Minors | balance to 100% | | | | | |

| | | | | | | |
|---|---|---|---|---|---|---|
| **** Product pH is about 7. | | | | | | |

### 2. Fabric cleaning compositions

### Liquid Fabric Cleaning Compositions

Liquid fabric cleaning compositions of the present invention preferably comprise an effective amount of one or more protease enzymes, preferably from about 0.0001 % to about 10%, more preferably from about 0.001% to about 1%, and most preferably from about 0.001% to about 0.1 % by weight of active protease enzyme of the composition. (See U.S. Patent No. 5,679,630 Examples).

### Example 18

### Liquid Fabric Cleaning Compositions

| | Example No. | | | | |
|---|---|---|---|---|---|
| Component | A | B | C | D | E |
| Protease | 0.05 | 0.03 | 0.30 | 0.03 | 0.10 |
| Suds boosting polymer | 1.4 | 1.7 | 0.8 | 2.5 | 0.6 |
| C₁₂- C₁₄ alkyl sulfate, Na | 20.00 | 20.00 | 20.00 | 20.00 | 20.00 |
| 2-Butyl octanoic acid | 5.00 | 5.00 | 5.00 | 5.00 | 5.00 |
| Sodium citrate | 1.00 | 1.00 | 1.00 | 1.00 | 1.00 |
| C₁₀ alcohol ethoxylate (3) | 13.00 | 13.00 | 13.00 | 13.00 | 13.00 |
| Monethanolamine | 2.50 | 2.50 | 2.50 | 2.50 | 2.50 |
| Water/propylene glycol/ethanol (100:1:1) | balance to 100% | | | | |

### Example 19

### Liquid Fabric Cleaning Compositions

| Component | Example No. 40 |
|---|---|
| NaLAS (100%am) | 16 |
| Neodol | 21.5 |
| Citrate | 6.8 |
| EDDS | 1.2 |
| Dispersant | 1.3 |
| Perborate | 12 |
| Phenolsulfonate ester of N-nonanoyl-6-aminocaproic acid | 6 |
| Protease (% pure enzyme) | 0.03 |
| Amylase | 0.40 |
| Cellulase | 0.03 |
| Solvent (BPP) | 18.5 |
| Suds boosting polymer | 0.5 |
| Carbonate | 10 |
| FWA 15 | 0.2 |
| TiO₂ | 0.5 |
| PEG 8000 | 0.4 |
| Perfume | 1.0-1.2 |
| Suds suppressor | 0.06 |
| Waters and minors | up to 100% |

### Example 20

### Liquid Fabric Cleaning Composition

Liquid fabric cleaning composition of particular utility under Japanese machine wash conditions is prepared in accordance with the invention:

| **Component** | **20** |
|---|---|
| AE2.5S | 15.00 |
| AS | 5.50 |
| N-Cocoyl N-methyl glucamine | 5.00 |
| Nonionic surfactant | 4.50 |
| Citric acid | 3.00 |
| Fatty acid | 5.00 |
| Base | 0.97 |
| Monoethanolamine | 5.10 |
| 1,2-Propanediol | 7.44 |
| EtOH | 5.50 |
| HXS | 1.90 |
| Boric acid | 3.50 |
| Ethoxylated tetraethylene-pentaimine | 3.00 |
| Suds boosting polymer | 0.30 |
| Protease | 0.069 |
| Amylase | 0.06 |
| Cellulase | 0.08 |
| Lipase | 0.18 |
| Brightener | 0.10 |
| Minors/inerts to 100% | |

### Personal Cleansing Compositions

All exemplified compositions can be prepared by conventional formulation and mixing techniques. Component amounts are listed as weight percents and exclude minor materials such as diluents, filler, and so forth. The listed formulations, therefore, comprise the listed components and any minor materials associated with such components.

### Example 22

| **Component** | **DD** | **EE** | **FF** | **GG** | **HH** |
|---|---|---|---|---|---|
| Ammonium Laureth Sulfate | 15.00 | 15.00 | 15.00 | 15.00 | 7.50 |
| BAS | 5.00 | 5.00 | 5.00 | 5.00 | 2.50 |
| Sodium Lauroyl Sarcosinate | 1.50 | 1.50 | 1.50 | 1.50 | 0.75 |
| Ethylene Glycol Distearate | 1.50 | 1.50 | 1.50 | 1.50 | 1.50 |
| Zinc Pyrithione | 1.00 | 1.00 | 1.00 | --- | 1.00 |
| Selenium Disulfide | --- | --- | --- | 1.00 | --- |
| Suds boosting polymer | 0.10 | 0.05 | 0.50 | 0.10 | 0.10 |
| Fragrance | q.s. | q.s. | q.s. | q.s. | q.s. |
| Color | q.s. | q.s. | q.s. | q.s. | q.s. |
| pH adjustment (Mono/Di sodium | q.s. | q.s. | - q.s. | q.s. | q.s. |
| Phosphate) | | | | | |
| viscosity adjustment (Sodium | q.s. | q.s. | q.s. | q.s. | q.s. |
| Chloride, | | | | | |
| preservative (DMDM Hydantoin); | q.s. | q.s. | q.s. | q.s. | q.s. |
| Water | | | | | |

| **Component** | **JJ** | **KK** | **LL** | **MM** | **NN** |
|---|---|---|---|---|---|
| BAES | 7.50 | 15.00 | 15.00 | 10.00 | 10.00 |
| BAS | 2.50 | 5.00 | 5.00 | 2.50 | 2.50 |
| Cocamidopropyl Betaine | --- | --- | --- | 2.50 | 2.50 |
| Sodium Lauroyl Sarcosinate | 0.75 | --- | --- | --- | --- |
| Ethylene Glycol Distearate | 1.50 | 1.50 | 1.50 | 1.50 | 1.50 |
| Ketoconazole | 1.00 | 1.00 | 1.00 | 1.00 | 1.00 |
| Suds boosting polymer | 0.05 | 0.10 | 0.10 | 0.10 | 0.10 |
| Fragrance | q.s. | q.s. | q.s. | q.s. | q.s. |
| Color | q.s. | q.s. | q.s. | q.s. | q.s. |
| pH adjustment (Mono/Di sodium | q.s. | q.s. | q.s. | q.s. | q.s. |
| Phosphate) | | | | | |
| Sodium Sulfate, PEG-600, | q.s. | q.s. | q.s. | q.s. | q.s. |
| Ammonium Xylene Sulfonate) | | | | | |
| preservative (DMDM Hydantoin) | q.s. | q.s. | q.s. | q.s. | q.s. |
| Water | | | | | |

| **Component** | **OO** | **PP** | **QQ** | **RR** | **SS** | **TT** |
|---|---|---|---|---|---|---|
| Ammonium Laureth Sulfate | 0 | 15.00 | 0 | 15.00 | 15.00 | 0 |
| BAS | 5.00 | 5.00 | 5.00 | 5.00 | 5.00 | 5.00 |
| BAES | 15.00 | 0 | 15.00 | 0 | 0 | 15.00 |
| Cocamidopropyl Betaine | 2.00 | --- | --- | --- | --- | --- |
| Sodium Lauroyl Sarcosinate | --- | 1.50 | 1.50 | --- | --- | --- |
| Sodium Cocoyl Glutamate | --- | --- | --- | --- | --- | 1.50 |
| Ethylene Glycol Distearate | 1.50 | 1.50 | 1.50 | 1.50 | 1.50 | 1.50 |
| Stearyl Alcohol | --- | --- | --- | --- | --- | --- |
| Zinc Pyrithione | 1.00 | 0.30 | 0.30 | 0.30 | 0.30 | 1.00 |
| Suds boosting polymer | 0.20 | 0.10 | 0.05 | 0.10 | 0.05 | 0.10 |
| Fragrance | q.s. | q.s. | q.s. | q.s. | q.s. | q.s. |
| Color | q.s. | q.s. | q.s. | q.s. | q.s. | q.s. |
| pH adjustment (Mono/Di | q.s. | q.s. | q.s. | q.s. | q.s. | q.s. |
| sodium Phosphate) | | | | | | |
| viscosity adjustment (Sodium | q.s. | q.s. | q.s. | q.s. | q.s. | q.s. |
| Chloride,) | | | | | | |
| preservative (DMDM | q.s. | q.s. | q.s. | q.s. | q.s. | q.s. |
| Hydantoin) | | | | | | |
| Water | q.s. | q.s. | q.s. | q.s. | q.s. | q.s. |

In preparing each of the compositions described in Examples 22 DD to TT, about one-third of the surfactant (added as 25wt% solution) is added to a jacketed mix tank and heated to about 74°C with slow agitation to form a surfactant solution. Salts (sodium chloride) and pH modifiers (disodium phosphate, monosodium phosphate) are added to the tank and allowed to disperse. Ethylene glycol distearate (EGDS) is added to the mixing vessel and allowed to melt. After the EGDS is melted and dispersed (e.g., after about 5-20 minutes), preservative and additional viscosity modifier are added to the surfactant solution. The resulting mixture is passed through a heat exchanger where it is cooled to about 35°C and collected in a finishing tank. As a result of this cooling step, the EGDS crystallizes to form a crystalline network in the product. The remainder of the surfactant and other components are added to the finishing tank with agitation to ensure a homogeneous mixture. Cationic guar polymer is dispersed in water as a 0.5-2.5% aqueous solution before addition to the final mix. Once all components have been added, viscosity and pH modifiers are added to the mixture to adjust product viscosity and pH to the extent desired.

Each exemplified composition provides excellent hair cleansing, lathering, antimicrobial agent deposition on the scalp and dandruff control.

### Example 23

| **Component** | **Example** | **Example** | **Example** |
|---|---|---|---|
| | **XVIII** | **XIX** | **XX** |
| BAES | 14.00 | 14.00 | 14.00 |
| Cocamidopropyl Betaine | -- | 2.50 | 2.50 |
| Cocoamphodiacetate | 2.50 | --- | --- |
| Cocamide MEA | 1.00 | 1.00 | 1.00 |
| Ethylene Glycol Distearate | 1.50 | 1.50 | 1.50 |
| Cetyl Alcohol | 0.42 | 0.42 | 0.42 |
| Stearyl Alcohol | 0.18 | 0.18 | 0.18 |
| Zinc Pyrithione | 1.00 | 1.00 | 1.00 |
| Suds boosting polymer | 0.15 | 0.15 | 0.15 |
| Fragrance | q.s. | q.s. | q.s. |
| Color | q.s. | q.s. | q.s. |
| pH adjustment (Mono/Di sodium | q.s. | q.s. | q.s. |
| Phosphate) | | | |
| viscosity adjustment (Sodium | q.s. | q.s. | q.s. |
| Chloride, | | | |
| preservative (DMDM Hydantoin); | q.s. | q.s. | q.s. |
| Water | | | |

In preparing each of the compositions described in Examples 23 XVIII to XX, from 50% to 100% by weight of the detersive surfactants are added to a jacketed mix tank and heated to about 74°C with slow agitation to form a surfactant solution. If used, pH modifiers (monosodium phosphate, disodium phosphate) are added to the tank and allowed to disperse. Ethylene glycol distearate (EGDS) and fatty alcohols (cetyl alcohol, stearyl alcohol) are then added to the mixing vessel and allowed to melt. After the EGDS is melted and dispersed (usually about 5-10 minutes), preservative (if used) is added and mixed into the surfactant solution. Additional viscosity modifier are added to the surfactant solution if necessary. The resulting mixture is passed through a heat exchanger where it is cooled to about 35°C and collected in a finishing tank. As a result of this cooling step, the EGDS crystallizes to form a crystalline network in the product. Any remaining surfactant and other components are added to the finishing tank with agitation to ensure a homogeneous mixture. Cationic guar polymer is dispersed in water as a 0.5-2.5% aqueous solution before addition to the final mix. Once all components have been added, viscosity and pH modifiers are added to the mixture to adjust product viscosity and pH to the extent desired.

Each exemplified composition provides excellent hair cleansing, lathering, antimicrobial agent deposition on the scalp, and dandruff control.

### Example 24

| **Component** | **Weight %** | | | | |
|---|---|---|---|---|---|
| | **UU** | **VV** | **WW** | **XX** | **YY** |
| BAS | 2.0 | 2.0 | 3.0 | 2.0 | 3.0 |
| Cocamidopropyl Betaine FB | 6.0 | 6.0 | 9.0 | 6.0 | 9.0 |
| Alkyl Glyceryl Sulfonate | 10.0 | 10.0 | 6.0 | 10.0 | 6.0 |
| Mixture A | 3.0 | 6.0 | --- | --- | --- |
| Mixture B | --- | --- | 3.0 | --- | 6.0 |
| Mixture C | --- | --- | --- | 3.0 | --- |
| Dihydrogenated Tallowamidoethyl | | | | | |
| Hydroxyethylmonium Methosulfate (1) | 0.25 | 0.50 | --- | 0.25 | --- |
| Ditallowamidoethyl Hydroxypropylmonium | | | | | |
| Methosulfate (2) | --- | --- | 0.25 | --- | 0.25 |
| Polyquaternium-16 (Luviquat 905) | --- | --- | --- | 0.25 | --- |
| Monosodium Phosphate | 0.1 | 0.1 | 0.1 | 0.1 | 0.1 |
| Disodium Phosphate | 0.2 | 0.2 | 0.2 | 0.2 | 0.2 |
| Glycol Distearate | 2.0 | 2.0 | 2.0 | 2.0 | 2.0 |
| Cocomonoethanol amide | 0.6 | 0.6 | 0.6 | 0.6 | 0.6 |
| Fragrance | 1.0 | 1.0 | 1.0 | 1.0 | 1.0 |
| Cetyl Alcohol | 0.42 | 0.42 | 0.42 | 0.42 | 0.60 |
| Stearyl Alcohol | 0.18 | 0.18 | 0.18 | 0.18 | --- |
| PEG-150 Pentaerythrityl Tetrastearate | 0.1 | 0.1 | 0.1 | 0.1 | 0.1 |
| Polyquaternium 10 (JR30M) | 0.3 | --- | --- | 0.1 | --- |
| Polyquaternium 10 (JR400) | --- | 0.3 | --- | --- | --- |
| Polyquaternium 10 (JR125) | --- | --- | 0.3 | --- | 0.1 |
| Suds boosting polymer | 0.4 | 0.8 | 0.2 | 1.0 | 0.5 |
| Dimethicone | --- | 0.3 | 0.3 | -- | -- |
| DMDM Hydantoin | 0.2 | 0.2 | 0.2 | 0.2 | 0.2 |
| Water | qs 100 | qs 100 | qs 100 | qs 100 | qs 100 |

| | | | | | |
|---|---|---|---|---|---|
| (1) Available under the tradename Varisoft 110 from Sherex Chemical Co. (Dublin, Ohio, USA) (2) Available under the tradename Varisoft 238 from Sherex Chemical Co. (Dublin, Ohio, USA) | | | | | |

| **Mixture A.** | **w/w ratio** |
|---|---|
| Styling Polymer: t-butyl acrylate/2-ethylhexyl methacrylate (90/10 w/w) | 40 |
| Volatile Solvent: isododecane | 60 |

| **Mixture B.** | **w/w ratio** |
|---|---|
| Styling Polymer: t-butyl acrylate/2-ethylhexyl methacrylate (90/10 w/w) | 50 |
| Volatile Solvent: isododecane | 50 |

| **Mixture C.** | **w/w ratio** |
|---|---|
| Styling Polymer: t-butyl acrylate/2-ethylhexyl methacrylate/ PDMS macromer | |
| (81/9/10 w/w) | 40 |
| Volatile Solvent: isododecane | 60 |

| **Mixture D.** | **w/w ratio** |
|---|---|
| Styling Polymer: vinyl pyrrolidone/vinyl acetate (5/95 w/w) | 40 |
| Volatile Solvent: diethyl succinate | 60 |

The compositions of the present invention, in general, can be made by mixing together at elevated temperature, e.g., about 72°C water and surfactants along with any solids (e.g., amphiphiles) that need to be melted, to speed mixing into the personal cleansing composition. Additional ingredients including the electrolytes can be added either to this hot premix or after cooling the premix. The nonionic or anionic polymers can be added as a water solution after cooling the premix. The ingredients are mixed thoroughly at the elevated temperature and then pumped through a high shear mill and then through a heat exchanger to cool them to ambient temperature. The silicone may be emulsified at room temperature in concentrated surfactant and then added to the cooled product. Alternately, for example, the silicone conditioning agent can be mixed with anionic surfactant and fatty alcohol, such as cetyl and stearyl alcohols, at elevated temperature, to form a premix containing dispersed silicone. The premix can then be added to and mixed with the remaining materials of the personal cleansing composition, pumped through a high shear mill, and cooled.

The personal cleansing compositions illustrated in Example XXII (JJJ to QQQ) illustrate specific embodiments of the personal cleansing compositions of the present invention, but are not intended to be limiting thereof. Other modifications can be undertaken by the skilled artisan without departing from the spirit and scope of this invention. These exemplified embodiments of the personal cleansing compositions of the present invention provide cleansing of hair and/or skin and improved conditioning.

All exemplified compositions can be prepared by conventional formulation and mixing techniques. Component amounts are listed as weight percents and exclude minor materials such as diluents, filler, and so forth. The listed formulations, therefore, comprise the listed components and any minor materials associated with such components.

### Example 25

| **Ingredients** | **JJJ** | **KKK** | **LLL** | **MMM** | **NNN** |
|---|---|---|---|---|---|
| BAES | 5.00 | -- | -- | -- | -- |
| BAS | 5.00 | 7.50 | 7.50 | 7.50 | 7.50 |
| Sodium alkyl glycerol sulfonate | 2.50 | 2.50 | 2.50 | 2.50 | 2.50 |
| Cocoamidopropyl Betaine | -- | -- | -- | -- | -- |
| Glycol Distearate | 2.00 | 1.50 | 2.00 | 2.00 | 2.00 |
| Cocomonoethanol amide | 0.60 | 0.85 | 0.85 | 0.85 | 0.85 |
| Cetyl Alcohol | 0.42 | 0.42 | 0.42 | 0.42 | 0.42 |
| Stearyl Alcohol | 0.18 | 0.18 | 0.18 | 0.18 | 0.18 |
| EDTA (ethylenediamine tetra acetic | 0.10 | 0.10 | 0.10 | 0.10 | 0.10 |
| acid) | | | | | |
| Monosodium phosphate | 0.10 | 0.10 | 0.10 | 0.10 | 0.10 |
| Disodium phosphate | 0.20 | 0.20 | 0.20 | 0.20 | 0.20 |
| Sodium Benzoate | 0.25 | 0.25 | 0.25 | 0.25 | 0.25 |
| Hydroxyethylcellulose¹ | 0.10 | 0.25 | -- | -- | -- |
| Hydroxypropyl Guar² | -- | -- | 0.25 | -- | -- |
| Hydroxyethylethylcellulose³ | -- | -- | | 0.25 | - |
| Suds boosting polymer | 0.5 | 0.2 | 1.5 | 1.0 | 0.4 |
| Polystyrene Sulfonate | -- | -- | | -- | 0.25 |
| Tricetyl methylammonium chloride | 0.58 | -- | -- | -- | -- |
| Perfume | 0.60 | 0.60 | 0.60 | 0.60 | 0.60 |
| Dimethicone | 1.00 | 1.50 | 1.50 | 1.50 | 1.50 |
| Glydant | 0.20 | 0.20 | 0.20 | 0.20 | 0.20 |
| NaCl | 0.20 | 0.30 | 0.30 | 1.00 | 0.30 |
| Water and minors | -------- q.s. to 100% --------- | | | | |

| | | | | | |
|---|---|---|---|---|---|
| ¹Natrosol 250 HHR from Aqualon ²Jaguar HP 60 from Rhone-Poulenc ³Bermocoll E411 FQ from Akzo Nobel | | | | | |

### Example 26

| **Ingredients** | **OOO** | **PPP** | **QQQ** |
|---|---|---|---|
| BAES | -- | 9.00 | 8.00 |
| BAS | 6.00 | -- | -- |
| Sodium alkyl glycerol sulfonate | 1.00 | 2.50 | -- |
| Cocoamidopropyl Betaine | -- | 2.50 | -- |
| Glycol Distearate | 1.50 | 1.50 | 2.00 |
| Cocomonoethanol amide | 0.85 | 0.85 | -- |
| Cetyl Alcohol | 0.42 | 0.42 | 0.40 |
| Stearyl Alcohol | 0.18 | 0.18 | 0.18 |
| EDTA (ethylenediamine tetra acetic | 0.10 | 0.10 | 0.10 |
| acid) | | | |
| Monosodium phosphate | 0.10 | 0.10 | 0.10 |
| Disodium phosphate | 0.20 | 0.20 | 0.20 |
| Sodium Benzoate | 0.25 | 0.25 | 0.25 |
| Hydroxyethylcellulose ¹ | 0.25 | 0.25 | 0.25 |
| Suds boosting polymer | 0.3 | 0.7 | 0.9 |
| Polystyrene Sulfonate | -- | -- | -- |
| Tricetyl methylammonium chloride | -- | -- | -- |
| Perfume | 0.60 | 0.60 | 0.60 |
| Dimethicone | 1.50 | 1.50 | -- |
| Glydant | 0.20 | 0.20 | 0.20 |
| Sodium Lauroamphoacetate | -- | -- | 3.60 |
| Polyquatemium-10 | -- | -- | 0.20 |
| NaCl | 0.30 | 0.30 | -- |
| Water and minors | --------- q.s. to 100% --------- | | |

| | | | |
|---|---|---|---|
| ¹Natrosol 250 HHR from Aqualon | | | |

The compositions of the present invention can be suitably prepared by any process chosen by the formulator, non-limiting examples of which are described in U.S. 5,691,297 Nassano et al., issued November 11, 1997; U.S. 5,574,005 Welch et al., issued November 12, 1996; U.S. 5,569,645 Dinniwell et al., issued October 29, 1996; U.S. 5,565,422 Del Greco et al., issued October 15, 1996; U.S. 5,516,448 Capeci et al., issued May 14, 1996; U.S. 5,489,392 Capeci et al., issued February 6, 1996; U.S. 5,486,303 Capeci et al., issued January 23, 1996.

In addition to the above examples, the cleaning compositions of the present invention can be formulated into any suitable laundry detergent composition, non-limiting examples of which are described in U.S. 5,679,630 Baeck et al., issued October 21, 1997; U.S. 5,565,145 Watson et al., issued October 15, 1996; U.S. 5,478,489 Fredj et al., issued December 26, 1995; U.S. 5,470,507 Fredj et al., issued November 28, 1995; U.S. 5,466,802 Panandiker et al., issued November 14, 1995; U.S. 5,460,752 Fredj et al., issued October 24, 1995; U.S. 5,458,810 Fredj et al., issued October 17, 1995; U.S. 5,458,809 Fredj et al., issued October 17, 1995; U.S. 5,288,431 Huber et al., issued February 22, 1994.

## Claims

1. A method of personal, lauchy or hard surface washing, cleansing or cleaning comprising enhancing the properties of a suds-forming and/or foam-forming personal, laundry or hard surface liquid washing, cleansing or cleaning composition other than liquid dishwashing composition, when using it in an aqueous solution, said composition comprising
(i) a washing or cleaning effective amount of a detersive surfactant, and
(ii) any further ingredient suitable for use in a personal, laundry or hard surface washing or cleaning composition other than liquid dishwashing composition,
said method comprising adding to said composition an effective amount to increase the suds and/or foam volume and suds and/or foam stability of a zwitterionic polymer comprised of moieties which, when placed in an aqueous solution having a pH of from 4 to 12, is capable of sustaining a positive or negative charge, said polymer having the formula 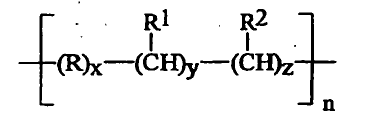 wherein
• the index n has a value such that the zwitterionic polymer has an average molecular weight of from 5,000 to 1,000,000 daltons, preferably of from 10,000 to '750,000 daltons.
• the index x is 1; y is 1 ; z is 1
• R is C₁-C₁₂ linear alkylene, C₁-C₁₂ branched alkylene
• R¹ is independently selected from -CO₂M, -SO₃M, -OSO₃M, -CH₂P(O)(OM)₂, -OP(O)(OM)₂, and units having the formula:
-CR⁸R⁹R¹⁰
wherein each R⁸, R⁹, and R¹⁰ is independently selected from the group consisting of hydrogen and -(CH₂)ₘR¹¹, wherein R¹¹ is -CO₂H, -SO₃M, -OSO₃M, -CH(CO₂H)CH₂CO₂H, -CH₂P(O)(OH)₂, -OP(O)(OH)₂, preferably -CO₂H, -CH(CO₂H)CH₂CO₂H, more preferably -CO₂H, provided that one R⁸, R⁹, or R¹⁰ is not a hydrogen atom, preferably two R⁸, R⁹, or R¹⁰ units are hydrogen, M is hydrogen or a salt forming cation, preferably hydrogen, the index m has the value from 0 to 10
• R² has the formula
-(L¹)_{i'}-(S)_{j'}-R⁴
wherein
◆ the index i' is 1;j' is 1
◆ L¹ is a linking unit independently selected from -C(O)-O- and -C(O)-NR'-, R' being independently hydrogen and C₁-C₄ alkyl ; preferably L¹ is-C(O)-NH-
◆ S is a "spacing unit" wherein each S unit is independently selected from C₁-C₁₂ linear alkylene, C₁-C₁₂ branched alkylene, preferably C₂-C₄ linear alkylene
◆ R⁴ is amino, preferably monoalkylamino or dialkylamino having the formula -N(R")₂, wherein each R" is independently hydrogen and C₁-C₄ alkyl, preferably hydrogen or methyl, or alternatively the two R" can form a heterocycle of 4 to 8 carbons ;
wherein the washing or cleaning composition has a pH from 4 to 12 when measured as a 10% aqueous solution.

2. A method according to claim 1, wherein the zwitterionic polymer has the formula 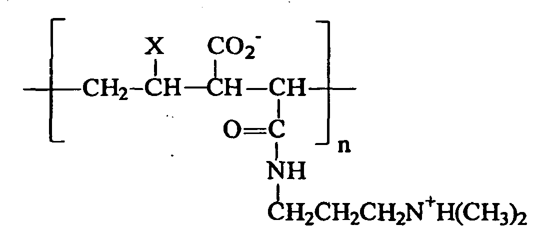 wherein X is C₆, n has a value such that the average molecular weight is from 5,000 to 1,000,000 daltons.

3. A method according to claim 1 or 2, wherein the composition is a personal cleansing composition comprising from 0.05 to 1.5 weight % of zwitterionic polymer, and from 10 to 25 weight % of amphoteric, zwitterionic and non-ionic detersive surfactants.

4. A method according to claim 1 or 2, wherein the composition is a fabric washing or cleaning composition comprising from 0.18 to 3.5 weight % of zwitterionic polymer, and from 5 to 60 weight % of non-ionic, anionic, cationic, amphoteric detersive surfactants.

5. A method according to claim 1 or 2, wherein the composition is a hard surface cleaning composition other than a liquid dishwashing composition, comprising from 0.7 to 2.8 weight % of zwitterionic polymer, and from 0.25 to 10 weight % of non-ionic, anionic, cationic, amphoteric detersive surfactants.

## Patentansprüche

1. Verfahren zum Waschen, Säubern oder Reinigen von Körper, Wäsche oder harten Oberflächen, das das Verstärken der Eigenschaften einer seifenlaugenbildenden und/oder schaumbildenden flüssigen Körper-, Wäsche- oder Hartoberflächenwasch-, -säuberungs- oder -reinigungszusammensetzung, die eine andere ist als eine flüssige Geschirrspülzusammensetzung, umfasst, wenn sie in einer wässrigen Lösung verwendet wird, wobei die Zusammensetzung Folgendes umfasst
(i) eine wasch- oder reinigungswirksame Menge eines Reinigungstensids und
(ii) jeglichen weiteren Bestandteil, der zum Gebrauch in einer Körper-, Wäsche- oder Hartoberflächenwasch- oder -reinigungszusammensetzung, die eine andere ist als eine flüssige Geschirrspülzusammensetzung, geeignet ist,
wobei das Verfahren die Zugabe einer zur Erhöhung des Seifenlaugen- und/oder Schaumvolumens und/oder der Seifenlaugen- und/oder Schaumstabilität wirksame Menge eines zwitterionischen Polymers, das aus Einheiten besteht, die bei Verwendung in einer wässrigen Lösung mit einem pH von 4 bis 12 in der Lage sind, eine positive oder negative Ladung zu bewahren, zu der Zusammensetzung umfasst, wobei das Polymer die folgende Formel aufweist 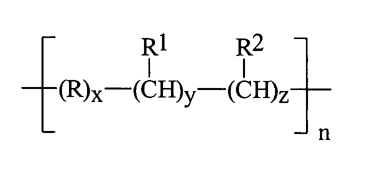 worin
• der Index n einen solchen Wert hat, dass das zwitterionische Polymer ein durchschnittliches Molekulargewicht von 5.000 bis 1.000.000 Dalton, vorzugsweise von 10.000 bis 750.000 Dalton aufweist.
• der Index x 1 ist; y 1 ist; z 1 ist
• R lineares C₁-C₁₂-Alkylen, verzweigtes C₁-C₁₂-Alkylen ist
• R¹ unabhängig ausgewählt ist aus -CO₂M, -SO₃M, -OSO₃M, -CH₂P(O)(OM)₂, -OP(O)(OM)₂, Einheiten mit der Formel:
-CR⁸R⁹R¹⁰
worin jedes R⁸, R⁹ und R¹⁰ unabhängig ausgewählt aus der Gruppe, bestehend aus Wasserstoff, -(CH₂)ₘR¹¹, worin R¹¹ -CO₂H, -SO₃M, -OSO₃M, -CH(CO₂H)CH₂CO₂H, -CH₂P(O)(OH)₂, -OP(O)(OH)₂, vorzugsweise -CO₂H, -CH(CO₂H)CH₂CO₂H, mehr bevorzugt -CO₂H ist, vorausgesetzt, dass ein R⁸, R⁹ oder R¹⁰ kein Wasserstoffatom ist, vorzugsweise zwei R⁸-, R⁹- oder R¹⁰-Einheiten Wasserstoff sind, M Wasserstoff oder ein salzbildendes Kation, vorzugsweise Wasserstoff sind, der Index m den Wert von 0 bis 10 aufweist
• R² die folgende Formel hat:
-(L¹)_{i'}-(S)_{j'}-R⁴
worin
◆ der Index i' 1 ist; j' 1 ist
◆ L¹ eine Verknüpfungseinheit ist, die unabhängig aus -C(O)-O- und -C(O)-NR'- ausgewählt ist, worin R' unabhängig Wasserstoff und C₁-C₄-Alkyl ist; L¹ vorzugsweise -C(O)-NH- ist
◆ S eine "Abstandseinheit" ist, wobei jede S-Einheit unabhängig aus linearem C₁-C₁₂-Alkylen, verzweigtem C₁-C₁₂-Alkylen, vorzugsweise linearem C₂-C₄-Alkylen ausgewählt ist
◆ R⁴ Amino, vorzugsweise Monoalkylamino oder Dialkylamino mit der Formel -N(R")₂ ist, worin jedes R" unabhängig Wasserstoff und C₁-C₄-Alkyl, vorzugsweise Wasserstoff oder Methyl, ist oder als Alternative die zwei R" einen Heterocyclus von 4 bis 8 Kohlenstoffen bilden können;
wobei die Wasch- oder Reinigungszusammensetzung einen pH von 4 bis 12 aufweist, wenn als eine 10 %ige wässrige Lösung gemessen wird.

2. Verfahren nach Anspruch 1, wobei das zwitterionische Polymer die folgende Formel aufweist 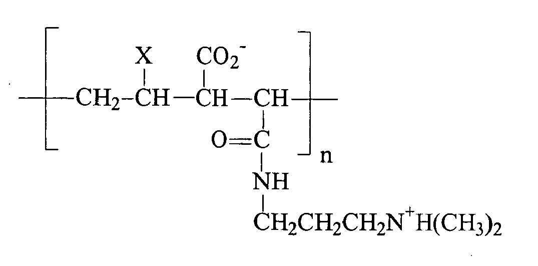 worin X C₆ ist, n einen solchen Wert hat, dass das durchschnittliche Molekulargewicht von 5.000 bis 1.000.000 Dalton beträgt.

3. Verfahren nach Anspruch 1 oder 2, wobei die Zusammensetzung eine Körperreinigungszusammensetzung ist, die von 0,05 bis 1,5 Gew.-% zwitterionisches Polymer und von 10 bis 25 Gew.-% amphotere, zwitterionische und nichtionische Reinigungstenside umfasst.

4. Verfahren nach Anspruch 1 oder 2, wobei die Zusammensetzung eine Stoffwasch- oder Reinigungszusammensetzung ist, die von 0,18 bis 3,5 Gew.-% zwitterionisches Polymer und von 5 bis 60 Gew.-% nichtionische, anionische, kationische, amphotere Reinigungstenside umfasst.

5. Verfahren nach Anspruch 1 oder 2, wobei die Zusammensetzung eine andere Reinigungszusammensetzung für harte Oberflächen als eine flüssige Geschirrspülzusammensetzung ist, die von 0,7 bis 2,8 Gew.-% zwitterionisches Polymer und von 0,25 bis 10 Gew.-% nichtionische, anionische, kationische, amphotere Reinigungstenside umfasst.

## Revendications

1. Procédé pour la toilette, le lavage, la purification ou le nettoyage du linge ou de surfaces dures comprenant le renforcement des propriétés d'une composition liquide pour la toilette, le lavage, la purification ou le nettoyage du linge ou de surfaces dures formant de la mousse autre qu'une composition liquide de lavage de la vaisselle, lorsqu'elle est utilisée dans une solution aqueuse, ladite composition comprenant
(i) une quantité efficace d'un agent tensioactif détersif de lavage ou de nettoyage, et
(ii) n'importe quel autre ingrédient approprié pour être utilisé dans une composition pour la toilette, le lavage ou le nettoyage du linge ou de surfaces dures autre qu'une composition liquide de lavage de la vaisselle,
ledit procédé comprenant l'ajout à ladite composition d'une quantité efficace pour augmenter le volume de la mousse et/ou la stabilité de la mousse d'un polymère zwittérionique constitué de fragments qui, lorsqu'il est placé dans une solution aqueuse ayant un pH allant de 4 à 12, est susceptible de soutenir une charge positive ou négative, ledit polymère étant de formule 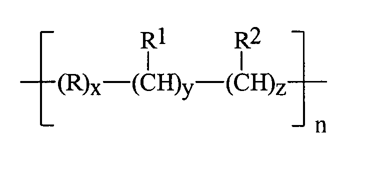 dans laquelle
• l'indice n a une valeur de telle sorte que le polymère zwittérionique a une masse moléculaire moyenne allant de 5000 à 1 000 000 daltons, de préférence de 10 000 à 750 000 daltons.
• l'indice x est 1; y est 1; z est 1
• R est un alkylène à chaîne linéaire en C₁ à C₁₂, un alkylène ramifié en C₁ à C₁₂
• R¹ est indépendamment choisi parmi les motifs -CO₂M, -SO₃M, -OSO₃M, - CH₂P(O)(OM)₂, -OP(O)(OM)₂, de formule:
-CR⁸R⁹R¹⁰
dans laquelle chaque R⁸, R⁹, et R¹⁰ sont indépendamment choisis dans le groupe comprenant de l'hydrogène, -(CH₂)ₘR¹¹, dans laquelle R¹¹ est -CO₂H, -SO₃M, -OSO₃M, -CH(CO₂H)CH₂CO₂H, -CH₂P(O)(OH)₂, -OP(O)(OH)₂, de préférence -CO₂H, -CH(CO₂H)CH₂CO₂H, plus préférablement -CO₂H, à condition qu'un R⁸, R⁹, ou R¹⁰ ne soit pas un atome d'hydrogène, de préférence deux motifs R⁸, R⁹, ou R¹⁰ sont de l'hydrogène, M est de l'hydrogène ou un cation salifiable, de préférence de l'hydrogène, l'indice m a une valeur de 0 à 10
• R² est de formule:
-(L¹)_{i'}-(S)_{j'}-R⁴
dans laquelle
◆ l'indice i' est 1; j' est 1
◆ L¹ est un motif de liaison indépendamment choisi parmi -C(O)-O- et-C(O)-NR'-, R' étant indépendamment de l'hydrogène et un alkyle en C₁ à C₄; de préférence L¹ est -C(O)-NH-
◆ S est un «motif d'espacement» dans lequel chaque motif S est indépendamment choisi parmi un alkylène à chaîne linéaire en C₁ à C₁₂, un alkylène ramifié en C₁ à C₁₂, de préférence un alkylène linéaire en C₂ à C₄
◆ R⁴ est amino, de préférence monoalkylamino ou dialkylamino de formule - N(R")₂, dans laquelle chaque R" est indépendamment de l'hydrogène et un alkyle en C₁ à C₄, de préférence de l'hydrogène ou du méthyle, ou, selon une autre possibilité, les deux R" peuvent former un hétérocycle de 4 à 8 carbones;
où la composition de lavage ou de nettoyage a un pH de 4 à 12 lorsqu'il est mesuré en tant que solution aqueuse à 10 %.

2. Procédé selon la revendication 1, dans lequel le polymère zwittérionique est de formule 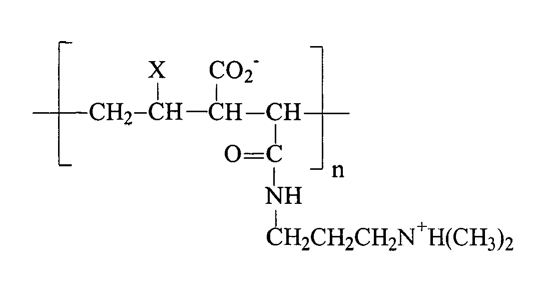 dans laquelle X est C₆, n a une valeur de telle sorte que la masse moléculaire moyenne est de 5000 à 1 000 000 daltons.

3. Procédé selon la revendication 1 ou 2, dans lequel la composition est une composition pour la toilette comprenant de 0,05 à 1,5 % en poids de polymère zwittérionique, et de 10 à 25 % en poids d'agents tensioactifs détersifs non ioniques, zwittérioniques et amphotères.

4. Procédé selon la revendication 1 ou 2, dans lequel la composition est une composition de lavage ou de nettoyage du tissu comprenant de 0,18 à 3,5 % en poids de polymère zwittérionique et de 5 à 60 % en poids d'agents tensioactifs détersifs amphotères cationiques, anioniques, non ioniques.

5. Procédé selon la revendication 1 ou 2, dans lequel la composition est une composition de nettoyage des surfaces dures autre qu'une composition liquide de lavage de la vaisselle, comprenant de 0,7 à 2,8 % en poids de polymère zwittérionique et de 0,25 à 10 % en poids d'agents tensioactifs détersifs amphotères, cationiques, anioniques, non ioniques.
